(19)

**Europäisches Patentamt**
**European Patent Office**
**Office européen des brevets**

(11)  **EP 3 195 688 B1**

(12)  # EUROPEAN PATENT SPECIFICATION

(45) Date of publication and mention
of the grant of the patent:
**25.11.2020 Bulletin 2020/48**

(51) Int Cl.:
*H04W 76/28* (2018.01)

(21) Application number: **15772024.4**

(22) Date of filing: **16.09.2015**

(86) International application number:
**PCT/IB2015/057132**

(87) International publication number:
**WO 2016/042500 (24.03.2016 Gazette 2016/12)**

(54) **DRX CYCLE CONFIGURATION IN DUAL CONNECTIVITY**

DRX-ZYKLUS-KONFIGURATION IN DUALER KONNEKTIVITÄT

CONFIGURATION DE CYCLE DRX DANS UNE CONNECTIVITÉ DOUBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.09.2014 US 201462051134 P**

(43) Date of publication of application:
**26.07.2017 Bulletin 2017/30**

(73) Proprietor: **Telefonaktiebolaget LM Ericsson
(publ)
164 83 Stockholm (SE)**

(72) Inventors:
- **RAHMAN, Imadur
  191 46 Sollentuna (SE)**
- **CALLENDER, Christopher
  Kinross KY13 0LW (GB)**
- **AXMON, Joakim
  21115 Malmö (SE)**
- **TAN BERGSTRÖM, Mattias
  120 71 Stockholm (SE)**
- **KAZMI, Muhammad
  17464 Sundbyberg (SE)**

(74) Representative: **Zacco Sweden AB
P.O. Box 5581
114 85 Stockholm (SE)**

(56) References cited:

- **"DRX impact by dual connectivity", 3GPP DRAFT;
  R2-132554 DRX IMPACT BY DUAL
  CONNECTIVITY, 3RD GENERATION
  PARTNERSHIP PROJECT (3GPP), MOBILE
  COMPETENCE CENTRE ; 650, ROUTE DES
  LUCIOLES ; F-06921 SOPHIA-ANTIPOLIS
  CEDEX ; FRANCE , vol. RAN WG2, no. Barcelona,
  Spain; 20130819 - 20130823 10 August 2013
  (2013-08-10), pages 1-2, XP050718420, Retrieved
  from the Internet:
  URL:http://www.3gpp.org/ftp/tsg_ran/WG2_RL
  2/TSGR2_83/Docs/ [retrieved on 2013-08-10]**
- **ALCATEL-LUCENT SHANGHAI BELL ET AL:
  "DRX consideration for dual connectivity", 3GPP
  DRAFT; R2-133542, 3RD GENERATION
  PARTNERSHIP PROJECT (3GPP), MOBILE
  COMPETENCE CENTRE ; 650, ROUTE DES
  LUCIOLES ; F-06921 SOPHIA-ANTIPOLIS
  CEDEX ; FRANCE , vol. RAN WG2, no. Ljubljana,
  Slovenia; 20131007 - 20131011 28 September
  2013 (2013-09-28), pages 1-2, XP050719254,
  Retrieved from the Internet:
  URL:http://www.3gpp.org/ftp/tsg_ran/WG2_RL
  2/TSGR2_83bis/Docs/ [retrieved on 2013-09-28]**
- **BROADCOM CORPORATION: "Design of DRX for
  dual connectivity", 3GPP DRAFT; R2-133532
  (DRX FOR DUAL CONNECTIVITY), 3RD
  GENERATION PARTNERSHIP PROJECT (3GPP),
  MOBILE COMPETENCE CENTRE ; 650, ROUTE
  DES LUCIOLES ; F-06921 SOPHIA-ANTIPOLIS
  CEDEX ; FRANCE , vol. RAN WG2, no. Ljubljana,
  Slovenia; 20131007 - 20131011 28 September
  2013 (2013-09-28), pages 1-2, XP050719244,
  Retrieved from the Internet:
  URL:http://www.3gpp.org/ftp/tsg_ran/WG2_RL
  2/TSGR2_83bis/Docs/ [retrieved on 2013-09-28]**

**Description**

<u>Technical Field</u>

The present disclosure relates to Dual Connectivity (DC) in a cellular communications network and, more specifically, to Discontinuous Reception (DRX) configuration in a DC mode of operation.

<u>Background</u>

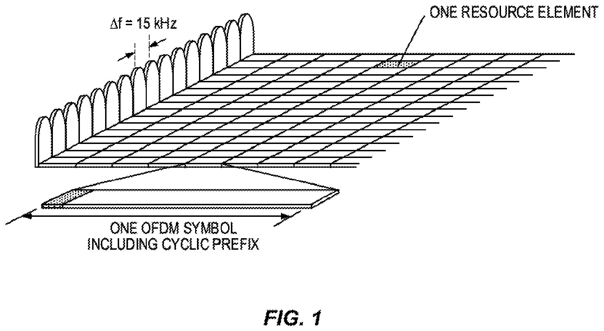

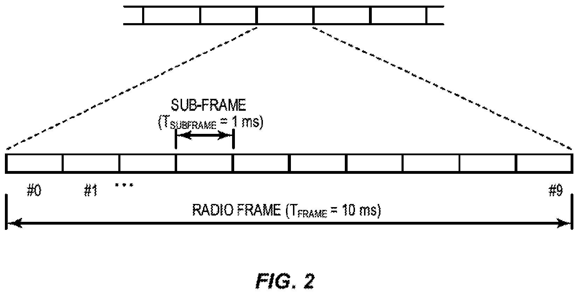

Third Generation Partnership Project (3GPP) Long Term Evolution (LTE) uses Orthogonal Frequency Division Multiplexing (OFDM) in the downlink and Discrete Fourier Transform spread (DFT-spread) OFDM in the uplink. The basic LTE downlink physical resource can thus be seen as a time-frequency grid as illustrated in Figure 1, where each resource element corresponds to one OFDM subcarrier during one OFDM symbol interval. In the time domain, LTE downlink transmissions are organized into radio frames of 10 milliseconds (ms), each radio frame consisting of ten equally-sized subframes of length $T_{subframe}$ = 1 ms, as illustrated in Figure 2.

Furthermore, the resource allocation in LTE is typically described in terms of Resource Blocks (RB), where a resource block corresponds to one slot (0.5 ms) in the time domain and twelve contiguous subcarriers in the frequency domain. A pair of two adjacent resource blocks in the time domain, or time direction, (1.0 ms) is known as a resource block pair. Resource blocks are numbered in the frequency domain, starting with zero from one end of the system bandwidth.

The notion of Virtual Resource Blocks (VRBs) and Physical Resource Blocks (PRBs) has been introduced in LTE. The actual resource allocation to a User Equipment device (UE) is made in terms of VRB pairs. There are two types of resource allocations, localized and distributed. In the localized resource allocation, a VRB pair is directly mapped to a PRB pair; hence, two consecutive and localized VRBs are also placed as consecutive PRBs in the frequency domain. On the other hand, the distributed VRBs are not mapped to consecutive PRBs in the frequency domain, thereby providing frequency diversity for data channel transmitted using these distributed VRBs.

Downlink transmissions are dynamically scheduled, i.e., in each subframe the base station transmits control information about to which terminals, or UEs, data is transmitted and upon which resource blocks the data is transmitted, in the current downlink subframe. This control signaling is typically transmitted in the first 1, 2, 3, or 4 OFDM symbols in each subframe, and the number n=1, 2, 3, or 4 is known as the Control Format Indicator (CFI) indicated by the Physical CFI Channel (PCHICH) transmitted in the first symbol of the control region. The control region also contains Physical Downlink Control Channels (PDCCHs) and possibly also Physical Hybrid Automatic Repeat Request (HARQ) Indication Channels (PHICHs) carrying Acknowledgments/Negative Acknowledgments (ACKs/NACKs) for the uplink transmission.

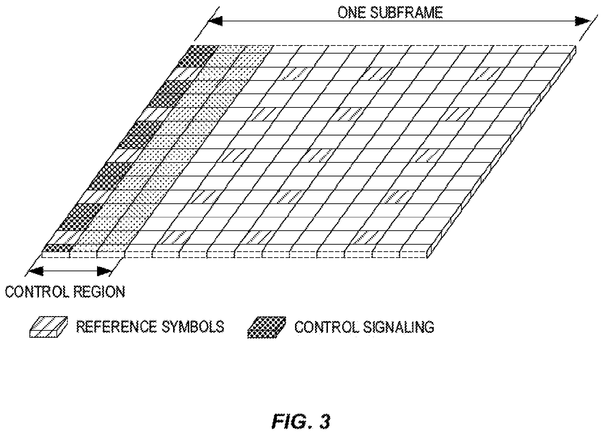

The downlink subframe also contains Common Reference Symbols (CRSs), which are known to the receiver and are used for coherent demodulation of, e.g., the control information. A downlink system with CFI = 3 OFDM symbols as control is illustrated in Figure 3.

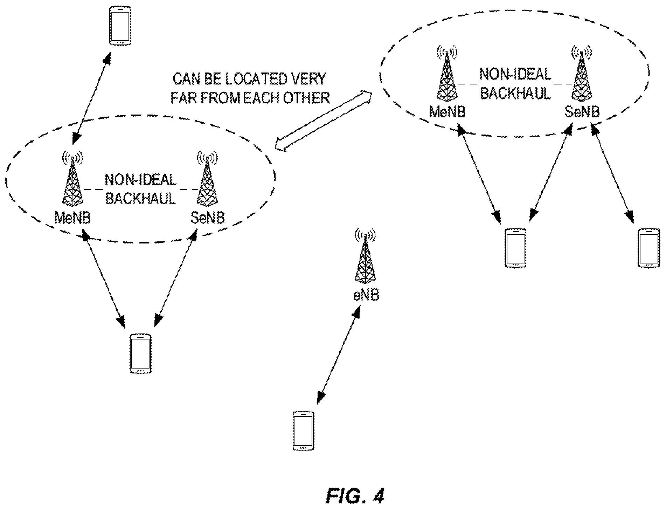

In Dual Connectivity (DC), a UE can be served by two nodes, which are referred to as a Master/Main enhanced or evolved Node B (eNB) (MeNB) and a Secondary eNB (SeNB). The UE is configured with a Primary Component Carrier (PCC) from the MeNB and a PCC from the SeNB. A Primary Cell on the PCC of the MeNB and a Primary Cell on the PCC of the SeNB are referred to as the PCell and the PSCell of the UE, respectively. The PCell and PSCell typically operate the UE independently. The UE is also configured with one or more Secondary Component Carriers (SCCs) from each of the MeNB and the SeNB. The corresponding Secondary Cells served by the MeNB and the SeNB are referred to as SCells. The UE in DC typically has a separate Transceiver (TX/RX) for each of the connections with the MeNB and the SeNB. This allows the MeNB and the SeNB to independently configure the UE with one or more procedures, e.g., Radio Link Monitoring (RLM), Discontinuous Reception (DRX) cycle, etc. on the PCell and the PSCell, respectively. One example of a DC deployment scenario is illustrated in Figure 4.

More specifically, DC is a mode of operation of a UE in RRC_CONNECTED state, where the UE is configured with a Master/Main Cell Group (MCG) and a Secondary Cell Group (SCG). A Cell Group (CG) is a group of serving cells associated with either the MeNB or the SeNB. The MCG and the SCG are defined as follows. The MCG is a group of serving cells associated with the MeNB, and the MCG includes the PCell and optionally one or more SCells. The SCG is a group of serving cells associated with the SeNB, and the SCG includes a Primary Cell of the SCG, which is referred to as the PSCell, and optionally one or more SCells.

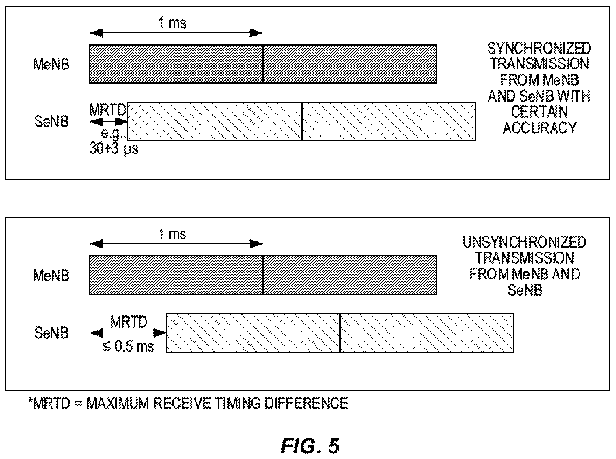

With respect to DC, two kinds of operation modes are considered, with the first being implemented in 3GPP Evolved Universal Terrestrial Radio Access (EUTRA) Release 12 and the other in a later release of the standard. The first operation mode is the synchronized operation mode. In the synchronized operation mode, downlink timing for the MeNB and the SeNB is synchronized down to about half an OFDM symbol (about $\pm$ 33 microseconds ($\mu$s)). The synchronized operation mode is implemented in 3GPP EUTRA Release 12. The second operation mode is the unsynchronized operation mode. In the unsynchronized operation mode, downlink timing for the MeNB and the SeNB is synchronized down to half a subframe ($\pm$ 500 $\mu$s). The unsynchronized mode will be covered in later releases of 3GPP EUTRA. Figure 5 illustrates the maximum received timing difference in synchronized and unsynchronized mode of DC.

Various types of radio measurements are performed in a cellular mitigations network. Some of these radio measurements are performed by the UE, while others are performed by the network. With regard to radio measurements performed by the UE, in order to support different functions such as mobility (e.g., cell selection, cell reselection, handover, Radio Resource Control (RRC) re-establishment, connection release with redirection, etc.), Minimization of Drive Tests (MDT), Self-Organizing Network (SON), positioning, etc., the UE is required to performed one or more measurements on the signals transmitted by neighboring cells. Prior to performing such measurements, the UE has to identify a cell and determine the Physical Cell Identity (PCI) of the cell. Therefore, PCI determination is also a type of a measurement.

The UE receives measurement configuration or assistance data/information, which is a message or an Information Element (IE) sent by the network node (e.g., a serving eNB, a positioning node, etc.) to configure the UE to perform the requested measurements. For example, the measurement configuration or assistance data/information may contain information related to the carrier frequency, Radio Access Technologies (RATs), type of measurement (e.g., Reference Signal Received Power (RSRP)), higher layer time domain filtering, measurement bandwidth related parameters, etc.

The measurements are done by the UE on the serving cell as well as on neighboring cells over some known reference symbols or pilot sequences. The measurements are done on cells on an intra-frequency carrier and inter-frequency carriers) as well as on inter-RAT carriers(s) (depending upon the UE capability as to whether the UE supports that RAT).

To enable inter-frequency and inter-RAT measurements for the UE requiring measurement gaps, the network has to configure the measurement gaps. Two periodic measurement gap patterns, both with a measurement gap length of 6 ms, are defined for LTE: measurement gap pattern #0 with repetition period 40 ms and measurement gap pattern #1 with repetition period 80 ms. In High Speed Packet Access (HSPA), the inter-frequency and inter-RAT measurements are performed in compressed mode gaps, which are also a type of network configured measurement gaps.

Some measurements may also require the UE to measure the signals transmitted by the UE in the uplink. The measurements are done by the UE in RRC connected state or in CELL_DCH state (in HSPA) as well as in low activity RRC states (e.g., idle state, CELL_FACH state in HSPA, URA_PCH and CELL_PCH states in HSPA, etc.).

In a multi-carrier or Carrier Aggregation (CA) scenario, the UE may perform the measurements on the cells on the PCC as well as on the cells on one or more SCCs. Thus, in DC, the UE may perform the measurements on the cells on the PCC and the one or more SCCs for the MCG as well as measurements on the cells on the PCC and the one or more SCCs for the SCG.

The measurements are performed by the UE for various purposes. Some example measurement purposes are: mobility, positioning, SON, MDT, Operation and Maintenance (O&M), network planning and optimization, etc.

The measurements are typically performed over longer time duration in the order of a few 100 ms to a few seconds. The same measurements are applicable in single carrier and CA. However, in CA, the measurement requirements may be different. For example, the measurement period may be different in CA, i.e. it can be either relaxed or more stringent depending upon whether the SCC is activated or not. This may also depend upon the UE capability, i.e. whether a CA capable UE is able to perform measurements on the SCC with or without gaps.

Examples of mobility measurements in LTE are: RSRP measurements and Reference Signal Received Quality (RSRQ) measurements. Examples of mobility measurements in HSPA are: Common Pilot Channel (CPICH) Received Signal Code Power (RSCP) measurements and CPICH Ec/No measurements. An example of mobility measurements in Global System for Mobile Communications (GSM) / GSM Enhanced Data Rates for GSM (EDGE) Radio Access Network (GERAN) are GSM carrier Received Signal Strength Indicator (RSSI) measurements. Examples of mobility measurements in Code Division Multiple Access 2000 (CDMA2000) systems are: Pilot strength measurements for CDMA2000 1 x Round Trip Time (RTT) and pilot strength measurements for High Rate Packed Data (HRPD).

The mobility measurement may also include identifying or detecting a cell, which may belong to LTE, HSPA, CDMA2000, GSM, etc. The cell detection process includes identifying at least the PCI and subsequently performing the signal measurement (e.g., RSRP) of the identified cell. The UE may also have to acquire the Cell Global Identification (CGI) of a cell. In HSPA and LTE, the serving cell can request the UE to acquire the system information of the target cell. More specifically, the system information is read by the UE to acquire the CGI, which uniquely identifies a cell, of the target cell. The UE also be requested to acquire other information such as Closed Subscriber Group (CSG) indicator, CSG proximity detection, etc. from the target cell.

Examples of positioning measurements in LTE are: Observed Time Difference of Arrival (OTDOA) measurements, e.g. Reference Signal Time Difference (RSTD) and Enhanced Cell Identification (E-CID) measurements, e.g. UE Receive-Transmit (RX-TX) time difference measurement. The UE RX-TX time difference measurement requires the UE to perform measurements on the downlink reference signal as well as on the uplink transmitted signals. Examples of other measurements which may be used for radio link maintenance, MDT, SON, or for other purposes are: control channel failure rate or quality estimate, e.g. paging channel failure rate and broadcast channel failure rate; and physical layer problem detection, e.g. out of synchronization (out of sync) detection, in synchronization (in-sync) detection, RLM, and radio link failure determination or monitoring.

Channel State Information (CSI) measurements performed by the UE are used for scheduling, link adaptation, etc. by the network. Examples of CSI measurements are Channel Quality Indication (CQI), Precoding Matrix Indicator (PMI), Rank Indicator (RI), etc.

The radio measurements performed by the UE are used by the UE for one or more radio operational tasks. Examples of such tasks are reporting the measurements to the network, which in turn may use them for various tasks. For example, in RRC connected state, the UE reports radio measurements to the serving network node. In response to the reported UE measurements, the serving network node takes certain decisions or actions, e.g. it may send mobility command to the UE for the purpose of cell change. Examples of cell change are handover, RRC connection re-establishment, RRC connection release with redirection, PCell change in CA, PCC change in PCC, etc. In idle or low activity state, an example of cell change is cell reselection. In another example, the UE may itself use the radio measurements for performing tasks, e.g. cell selection, cell reselection, etc.

As discussed above, radio measurements may also be performed by the network node. In order to support different functions such as mobility (e.g., cell selection, handover, etc.), positioning a UE, link adaption, scheduling, load balancing, admission control, interference management, interference mitigation, etc., the radio network node (e.g., the base station) also performs radio measurements on signals transmitted and/or received by the radio network node. Examples of such measurements are Signal to Noise Ratio (SNR), Signal to Interference plus Noise Ratio (SINR), Received Interference Power (RIP), Block Error Rate (BLER), propagation delay between the UE and itself, TX carrier power, TX power of specific signals (e.g., TX power of reference signals), positioning measurements, etc.

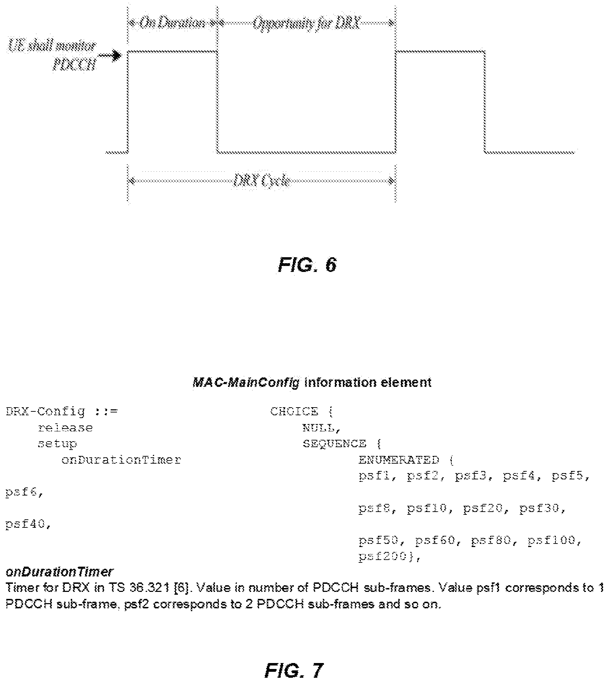

LTE has a number of power saving mechanisms. Some of these power saving mechanisms are: DRX and Discontinuous Transmission (DTX) which is the DRX equivalent at the UE transmitter, both of which reduces transceiver duty cycle while in active operation. The DRX is also used in the RRC_IDLE state. In RRC IDLE state typically a longer DRX cycle length is used than that in active mode. The usage of DRX is shown in Figure 6. As seen in Figure 6, a UE is required to monitor the DL control channels (e.g., PDCCH) during the DRX ON duration of the DRX cycle, i.e. the UE receiver has to be active during the ON period of the DRX to monitor the PDCCH. Conversely, while in DRX mode that is in the OFF duration of the DRX cycle, the UE does not have to monitor the DL control channel like PDCCH and therefore it can remain in power saving mode by turning off its receiver.

Using RRC signaling, the network sets a DRX cycle for the UE where the UE is operational for a certain period of time when all the scheduling and paging information is transmitted. This period of time is referred to as the ON duration. At other times, the network knows that the UE is completely turned off and is not able to receive anything. This is referred to as the DRX time. Except when in DRX, the UE radio must be active to monitor PDCCH (to identify downlink data). During DRX, the UE radio can be turned off.

The DRX/DTX functionality is an effective way to reduce the UE's battery power usage, but at the same time it introduces further constraints in the tasks of the scheduler at the eNB. The immediate consequence of DRX/DTX functionality is an average increase of packet delivery delays. The short DRX/DTX represents a further attempt to exploit the inactivity periods of the UE to save even more power. This further savings could be remarkable with certain types of traffic, but can also be very limited with others, like Voice over Internet Protocol (VoIP).

As mentioned earlier, DRX is configured by RRC mechanisms. DRX may have long or short "off" durations. The transition between long DRX and short DRX is determined by the eNB (Medium Access Control (MAC) commands) or by the UE based on an activity timer.

The use of long or short DRX largely depends on the application. A lower duty cycle could be used during a pause in speaking during a VoIP call. When speaking resumes, this results in lower latency. Similarly, for more non-real time services, e.g. data communication, for packets arriving at a lower rate than voice services, the UE can be off for a longer period of time. For packets arriving more often, the DRX interval ' is reduced during this period.

Typically all UEs are in DRX, where the ON duration can be as small as 1 ms, as illustrated in Figure 7. Figure 7 illustrates the MAC_MainConfig information element from 3GPP Technical Specification (TS) 36.331 Rel-8. There is a common DRX for the PCell and the SCell in CA. That means the PCell and the SCell reception times should be well within the DRX ON duration. Alternatively, the network has to adapt the DRX ON duration.

When the UE is configured with DRX, the UE performs intra-frequency, inter-frequency, and inter-RAT measurements according to the DRX cycle, e.g. typically once per DRX cycle especially for a DRX cycle of 40 ms or longer. Therefore, the measurement time is a function of DRX cycle length, i.e. scales with the DRX cycle length of the configured DRX cycle.

In the current DRX framework, a common DRX is configured for CA. In case of common DRX, the UE is instructed to perform inter-frequency measurement and inter-RAT measurements with requirements which depend on the DRX cycle length of the common DRX. However, for DC, there may be cases when separate DRX cycles are configured for serving cells in the MCG and for serving cells in the SCG, e.g. a DRX cycle of 40 ms and 1280 ms for the MCG and the SCG, respectively. In this case the inter-frequency measurement and the inter-RAT requirements for the UE cannot be specified according to the common DRX cycle. As the requirements are not clear, it is also not clear how the UE will implement inter-frequency and inter-RAT cell search and measurement functionality when the UE is configured with two independent DRX cycles for the MCG and the SCG. This may lead to unspecified UE behavior, thus creating uncertainties in measurement performances and resulting in inconsistent measurement performance between different UE implementations. This in turn may adversely affect the inter-frequency measurement and inter-RAT mobility performance of the UE.

*DRX impact by dual connectivity* (3GPP submission R2-132554) describes the use of a common DRX cycle for a UE operating in a DC mode of operation for small cell enhancement.

*DRX consideration for dual connectivity* (3GPP submission R2-133542) describes the use of a common DRX cycle for multiple carriers and types of traffic in legacy systems without a DC mode of operation. It describes the use of separate DRX cycles for different eNB.

*Design of DRXfor dual connectivity* (3GPP submission R2-133532) discloses the use of a common DRX configuration for dual connectivity.

## Summary

The invention is defined by the independent claims.

Those skilled in the art will appreciate the scope of the present disclosure and realize additional aspects thereof after reading the following detailed description of the embodiments in association with the accompanying drawing figures.

## Brief Description of the Drawings

The accompanying drawing figures incorporated in and forming a part of this specification illustrate several aspects of the disclosure, and together with the description serve to explain the principles of the disclosure.

Figure 1 illustrates the basic Long Term Evolution (LTE) downlink physical resource;

Figure 2 illustrates the LTE downlink frame structure;

Figure 3 illustrates a LTE downlink system with a Control Format Indicator (CFI) of three;

Figure 4 illustrates one example of a Dual Connectivity (DC) deployment;

Figure 5 illustrates the maximum received timing difference in synchronized and unsynchronized modes of DC;

Figure 6 illustrates a Discontinuous Reception (DRX) cycle;

Figure 7 illustrates the MAC_MainConfig information element from Third Generation Partnership Project (3GPP) Technical Specification (TS) 36.331 Rel-8, which illustrates that the DRX ON duration can be as small as 1 ms;

Figure 8 illustrates a cellular communications network that provides DC for a User Equipment device (UE) according to some embodiments of the present disclosure;

Figure 9 is a flowchart that illustrates a process performed by a network node to determine and configure a reference DRX cycle for a UE operating in DC according to some embodiments of the present disclosure;

Figure 10 illustrates a process performed by a UE to determine and configure a reference DRX cycle according to some embodiments of the present disclosure;

Figure 11 illustrates one example of a signaling scheme for signaling an indicator of at least one reference DRX cycle, or configuration, for a measurement object from a network node to a UE according to some embodiments of the present disclosure;

Figure 12 illustrates the operation of a network node and a UE with respect to determining a reference DRX cycle per measurement object for the UE according to some embodiments of the present disclosure;

Figure 13 is a flowchart that illustrates the operation of a UE to determine and use at least one reference DRX cycle according to some embodiments of the present disclosure;

Figure 14 is a flowchart that illustrates the operation of a UE to determine a reference DRX cycle based on a predefined rule according to some embodiments of the present disclosure;

Figure 15 illustrates the operation of a network node and a UE according to some embodiments of the present disclosure in which the reference DRX cycle for groups of carriers is determined based on one or more rules;

Figure 16 illustrates the operation of a network node and a UE according to some embodiments of the present disclosure in which the network node implements the one or more rules for determining a reference in DRX cycles for multiple groups of carriers;

Figure 17 illustrates the operation of a network node to determine and configure at least one reference DRX cycle for a UE according to some embodiments of the present disclosure;

Figures 18 and 19 are block diagrams of a network node according to some embodiments of the present disclosure; and

Figures 20 and 21 are block diagrams of a UE according to some embodiments of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

Systems and methods are disclosed herein relating to determining and using a reference Discontinuous Reception (DRX) cycle for a User Equipment device (UE) operating in a Dual Connectivity (DC) mode of operation. Before describing embodiments of the present disclosure, a few definitions will first be provided.

**Network node:** In some embodiments a more general term "network node" is used and it can correspond to any type of radio network node or any network node, which communicates with a UE and/or with another network node. Examples of network nodes are a Node B, a Base Station (BS), a radio base station, a Multi-Standard Radio (MSR) radio node such as a MSR BS, an enhanced or evolved Node B (eNB), a network controller, a Radio Network Controller (RNC), a BS Controller (BSC), a relay or relay node, a donor node controlling relay, a Base Transceiver Station (BTS), an Access Point (AP), transmission points, transmission nodes, a Remote Radio Unit (RRU), a Remote Radio Head (RRH), nodes in a Distributed Antenna System (DAS), a core network node (e.g., a Mobile Switching Centre (MSC), a Mobility Management Entity (MME), etc.), Operation and Maintenance (O&M), an Operations Support System (OSS), a Self-Organizing Network (SON), a positioning node (e.g., an Evolved Serving Mobile Location Centre (E-SMLC)), Minimization of Drive Tests (MDT), etc.

**User Equipment, or User Equipment device,** (UE): In some embodiments the non-limiting term UE is used and it refers to any type of wireless device communicating with a network node and/or with another UE in a cellular or mobile communications system. Examples of a UE are a target device, a Device to Device (D2D) UE, a machine type UE or UE capable of Machine to Machine (M2M) communication, a Personal Digital Assistant (PDA), an iPad, a tablet, a mobile terminal, a smart phone, Laptop Embedded Equipped (LEE), Laptop Mounted Equipment (LME), Universal Serial Bus (USB) dongles, etc.

**Dual Connectivity (DC):** DC is a mode of operation of a UE in connected state, where the UE is configured with a Master/Main Cell Group (MCG) and a Secondary Cell Group (SCG), where a Cell Group (CG) is a group of serving cells associated with either a Master/Main eNB (MeNB) or a Secondary eNB (SeNB).

**Master/Main eNB (MeNB):** This is an eNB to which the UE is connected as the main eNB-UE link for DC. It contains, or provides, at least a Primary Cell (PCell) of the UE and may also contain, or provide, one or more Secondary Cells (SCells) of the UE.

**Secondary eNB (SeNB):** This is the other eNB to which the UE is connected to for DC. It contains, or provides, at least a Primary Secondary Cell (PSCell) of the UE and may also contain, or provide, one or more SCells of the UE.

Note that, for the discussion herein, there is one MeNB and one SeNB; however, the embodiments described herein are also valid for one MeNB and more than one SeNBs.

**Master/Main Cell Group (MCG):** The MCG is a group of serving cells associated with the MeNB, and the MCG includes a PCell and optionally one or more SCells.

**Secondary Cell Group (SCG):** The SCG is a group of serving cells associated with the SeNB, and the SCG includes a PCell of the SCG, which is referred to as the PSCell, and optionally one or more SCells.

**UE Capability:** In some embodiments, UE capability in terms of the maximum number of Component Carriers (CCs) that the UE can use for DC operation (i.e., for Carrier Aggregation (CA) of CCs from different eNBs, i.e. the MeNB and the SeNB) is used. In some embodiments, the UE capability refers to the maximum total number of CCs from all network nodes involved in DC operation of the UE. In some embodiments, UE capability refers to the maximum number of CCs per network node involved in DC operation of the UE. In some embodiments, UE capability information is obtained in the network node based on a predefined rule, information received from the UE, information received from another network node, or any combination thereof.

**Component Carrier (CC):** A CC, also interchangeably referred to herein as a carrier, Primary Component Carrier (PCC), or Secondary Component Carrier (SCC), is configured at the UE by a network node using higher layer signaling, e.g. by sending a Radio Resource Control (RRC) configuration message to the UE. The configured CC is used by the network node for serving the UE on the serving cell (e.g., on the PCell, the PSCell, the SCell, etc.) of the configured CC. The configured CC is also used by the UE for performing one or more radio measurements (e.g., Reference Signal Received Power (RSRP), Reference Signal Received Quality (RSRQ), etc.) on the cells operating on the CC, e.g. the PCell, the SCell, or the PSCell and neighboring cells.

In some embodiments the term "determining" is used; however, and it may also be obtaining, receiving, detecting, identifying etc., information or parameter etc.

Systems and methods for determining and using a reference DRX cycle for a UE operating in a DC mode of operation are disclosed. Note that the terms DRX cycle and DRX configuration are used interchangeably herein. Further, as used herein, a DRX cycle (such as a reference DRX cycle) includes, and in some embodiments consists of, a DRX cycle state and/or a DRX cycle duration or periodicity. A reference DRX cycle state is either a DRX ON state in which DRX is used or a DRX OFF state in which DRX is not used. A DRX cycle duration or periodicity is the period with which the DRX cycle repeats. In other words, the duration of the DRX cycle consists of consecutive periods of OFF state and ON state of the DRX cycle. For example, if the length of the ON duration is 10 ms and the length of the OFF duration is 30 ms, then the DRX cycle period or duration is 40 ms. As such, when the present disclosure refers to "determining a reference DRX cycle," this could, for example, mean that a reference DRX cycle state is determined based on an indicator to either use the MCG as the source for the reference DRX cycle state or use the SCG as the source for the reference DRX cycle state and/or that a reference DRX cycle duration or periodicity is determined.

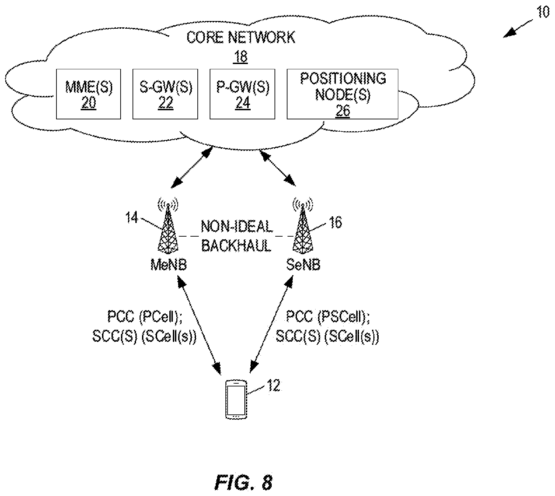

In this regard, Figure 8 illustrates a cellular communications network 10 that provides dual connectivity for a UE 12. As illustrated, the cellular communications network 10 includes a radio access network that includes eNBs 14 and 16, which in this example operate as a MeNB 14 and an SeNB 16 for DC for the UE 12. Notably, while the eNBs 14 and 16 are illustrated and described with respect to Figure 8, more generally, the eNBs 14 and 16 may be referred to herein as radio access nodes serving a MCG and a SCG of the UE 12, respectively. The MeNB 14 and the SeNB 16 are connected by a non-ideal backhaul link. As used herein, a non-ideal backhaul link is the one which involves or requires some delay in exchanging information between the MeNB and the SeNB. For example, the delay can be in the order of 10-100 ms depending on the implementation and the load of information being transmitted on the backhaul. The MeNB 14 and the SeNB 16 are also connected to a core network 18, which includes various types of core network nodes including in this example one or more MMEs 20, one or more Serving Gateways (S-GWs) 22, one or more Packet Data Network Gateways (P-GWs) 24, and one or more positioning nodes 26.

For DC, the MeNB 14 provides a PCell of the UE 12 on a PCC and one or more SCells of the UE 12 on one or more SCCs. The PCell and the one or more SCells provided by the MeNB 14 form a MCG for the UE 12. In a similar manner, the SeNB 16 provides a PCell, which is referred to as a PSCell, on a PCC and one or more SCells on one or more SCCs. The PSCell and the one or more SCells provided by the SeNB 16 form a SCG for the UE 12. The UE 12 has DC to the MCG provided by the MeNB 14 and the SCG provided by the SeNB 16.

When operating in DC, the UE 12 is configured with a first DRX cycle for the MCG and a second DRX cycle for the SCG. As discussed above, the UE 12 performs various radio measurements based on the configured DRX cycle. This presents a problem in DC. In particular, since the UE 12 is configured with different DRX cycles for the MCGs and the SCGs, the DRM cycle that is used by the UE 12 with regard to the radio measurements is not dear. In order to address this problem, systems and methods are disclosed herein for determining and using a reference DRX cycle for the UE 12 when operating in DC mode.

Embodiments are disclosed in which a number of operations related to DC performed by both a network node (e.g., the MeNB 14, the SeNB 16, the positioning node 26, etc.) and the UE 12.

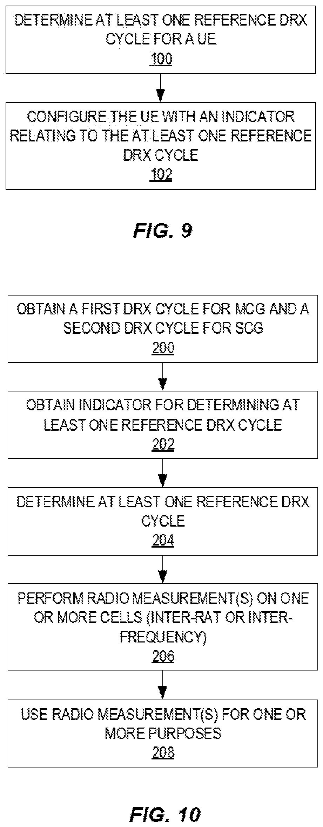

In this regard, Figures 9 and 10 are flowcharts illustrating the operation of a network node and the UE 12, respectively, according to some embodiments of the present disclosure. As illustrated in Figure 9, in some embodiments, the process performed by a network node to determine and configure a reference DRX cycle for the UE 12 operating in DC is as follows. The UE 12 is configured with at least one serving cell in MCG and at least one serving cell in SCG. Here, the network node may be, for example, the MeNB 14, the SeNB 16, or the position node 26.

As illustrated in Figure 9, the network node determines, based on one or more criteria, at least one reference DRX cycle for use by the UE 12 for performing measurements on cells belonging to one or more inter-frequency and/or inter-Radio Access Technology (RAT) carrier frequencies or layers (step 100). The terms carrier frequency, carrier, frequency, frequency layer, and layer are interchangeably used herein. However, generally, a set of narrow bandwidth carrier frequencies is called a layer or frequency layer. For example, a set of GSM carriers, each comprising of 200 KHz, is called one layer. In one example, one set of 32 GSM carriers may comprise one layer. The reference DRX cycle is one of or a function of at least a first DRX cycle configured for receiving signals from the serving cell(s) belonging to the MCG and a second DRX cycle configured for receiving signals from the serving cell(s) belonging to the SCG. The network node configures the UE 12 with an indicator, or identifier, relating to the at least one reference DRX cycle (step 102). In particular, the indicator relates the at least one reference DRX cycle determined in step 100 and one or more inter-frequency and/or inter-RAT carrier frequency or layers on which the UE 12 is to perform one or more measurements.

As illustrated in Figure 10, in some embodiments the process performed by the UE 12 to determine and configure a reference DRX cycle for the UE 12 operating DC is as follows. The UE 12 is configured with at least one serving cell in the MCG and at least one serving cell in the SCG. The UE 12 obtains a first DRX cycle configured for receiving signals from the serving cell(s) belonging to the MCG and a second DRX cycle configured for receiving signals from the serving cell(s) belonging to the SCG (step 200). The UE 12 obtains an indicator, or identifier, based on a predefined rule(s) or from a network node, for determining at least one reference DRX cycle for the UE 12 (step 202). In other words, the indicator enables the UE 12 to determine at least one reference DRX cycle for use by the UE 12 for performing measurements on cells belonging to one or more inter-frequency and/or inter-RAT carrier frequencies or layers. The reference DRX cycle is one of or a function of at least the first DRX cycle configured for receiving signals from the serving cell(s) belonging to the MCG and the second DRX cycle configured for receiving signals from the serving cell(s) belonging to the SCG.

The UE 12 determines the at least one reference DRX cycle based on the obtained indicator, or identifier, and the obtained first and second DRX cycle configurations (step 204). The UE 12 performs one or more radio measurements on one or more cells of one or more inter-frequency and/or inter-RAT carriers or layers according to the at least one reference DRX cycle (step 206). Optionally, in some embodiments, the UE 12 uses the performed one or more radio measurements for one or more purposes or operations, e.g. for cell reselection, reporting measurement results to the network node, positioning of the UE 12, etc. (step 208).

In the discussion below, several mechanisms, rules, and criteria for determining reference DRX cycle configurations are described. In some embodiments, systems and methods are provided for configuring reference DRX cycle configurations per measurement object (aka reference DRX cycle per carrier frequency or per layer). In some embodiments, systems and methods are provided for configuring reference DRX cycle configurations per carrier groups (aka reference DRX cycle per carrier groups with different performances). Embodiments for selecting reference DRX cycle configurations based on various criteria are also disclosed.

Reference DRX Cycle Configuration Per Measurement Object/Type

When the UE 12 performs radio measurements while configured with DRX, the requirements on the delay for completing the radio measurement (and hence providing the measurement result to the network node) depends on the DRX configuration of the UE 12. For Long Term Evolution (LTE), this is described in Third Generation Partnership Project (3GPP) Technical Specification (TS) 36.133, Rel-8 Version 8.5.0. With a long periodicity, the UE 12 is given more time to perform the measurements. With a shorter periodicity, the UE 12 is required to complete the measurements more quickly. For example, in the current LTE standards, the RSRP/RSRG measurement periods for DRX cycles of 160 milliseconds (ms) and 640 ms are 640 ms and 2560 ms, respectively.

In DC, the network node may configure the UE 12 to have different DRX configurations for different CGs, namely, one DRX configuration for the MCG and another DRX configuration for the SCG. The UE 12 activity for these different CGs may differ; hence, the network may configure different DRX periodicities for these different CGs. For example, the UE 12 may have more frequent traffic in the SCG compared to the MCG.

As described below, the UE 12 may obtain per measurement object reference DRX configuration (i.e., reference DRX cycle(s)) based on an explicit indication from the network node in some embodiments or based on a predefined rule(s), e.g. default configuration, in other embodiments. After obtaining the reference DRX configuration, the UE 12 performs one or more radio measurements and, optionally, uses the radio measurements for one or more purposes, e.g. for cell reselection, reporting to network node, positioning, etc.

With regard to explicit indication of a least one reference DRX cycle for the UE 12 per measurement object, in some embodiments, the network node will indicate to the terminal (i.e., the UE 12) for a measurement object which DRX configuration (i.e., the DRX cycle configured for the MCG or the DRX cycle configured for the SCG) the UE 12 should use as the reference DRX configuration. The indication is therefore used to indicate which reference DRX configuration is to be used by the UE 12 for performing measurements on cells of a certain carrier, i.e. the reference DRX configuration is per carrier frequency.

The reference DRX configuration may also be used for performing certain type of measurements. The reference DRX configuration may be linked to one or more of these particular types of measurements through indication. In some embodiments, the network node indicates the same or different reference DRX configurations for measurement objects. A measurement object typically contains a configuration for performing similar types of measurements, e.g. signal measurements such as RSRP, RSRQ, Wideband RSRQ (WB-RSRQ), etc. The reference DRX configuration may be the same for all types of measurements or may be different for different types of measurements. Examples of such measurements are:

- Measurements done on cells of non-serving carrier frequencies. Examples of non-serving carriers are inter-frequency and/or inter-RAT carriers and corresponding measurements are called inter-frequency and/or inter-RAT measurements. This is explained with a few examples below:

  ▪ The network node may indicate that the UE 12 is to measure on cells of both inter-frequency carrier, f1, and inter-frequency carrier, f2, using the DRX cycle configured for the MCG.
  ▪ The network node may indicate that the UE 12 is to measure on cells of inter-frequency carrier, f1, and cells of inter-frequency carrier, f2, using the DRX cycles of the MCG and the SCG, respectively. For example, the indication can be a predefined indicator or identifier such as ID # 0 and ID # 1 corresponding to DRX cycles of the MCG and the SCG, respectively. The UE 12 is also configured with DRX cycles of the MCG and the SCG; so based on the indicator and the configured DRX cycles for the MCG and the SCG, the UE 12 can determine the reference DRX cycle for measuring on certain inter-frequency or inter-RAT carrier(s).

- Positioning measurements, e.g. Enhanced Cell Identification (E-CID) UE Receive-Transmit (RX-TX) time difference, Observed Time Difference of Arrival (OTDOA) Reference Signal Time Difference (RSTD) measurements, etc.
- In particular, when a positioning request or request for performing positioning measurements (e.g., UE RX-TX time difference, OTDOA RSTD measurements) is received by the UE 12 from the positioning node 26, then the UE 12 may use the reference DRX configuration for performing these positioning measurements.

These embodiments allow the network node to configure, for each measurement object, which DRX configuration the terminal (i.e., the UE 12) should use as the reference DRX configuration. Hence, the network node can decide the necessary minimum delay requirements for various measurement objects and whether the MCG or the SCG DRX configuration would be more appropriate as a reference. Different ways in which the network node can decide which DRX configuration should be used as a reference for a measurement object are described below.

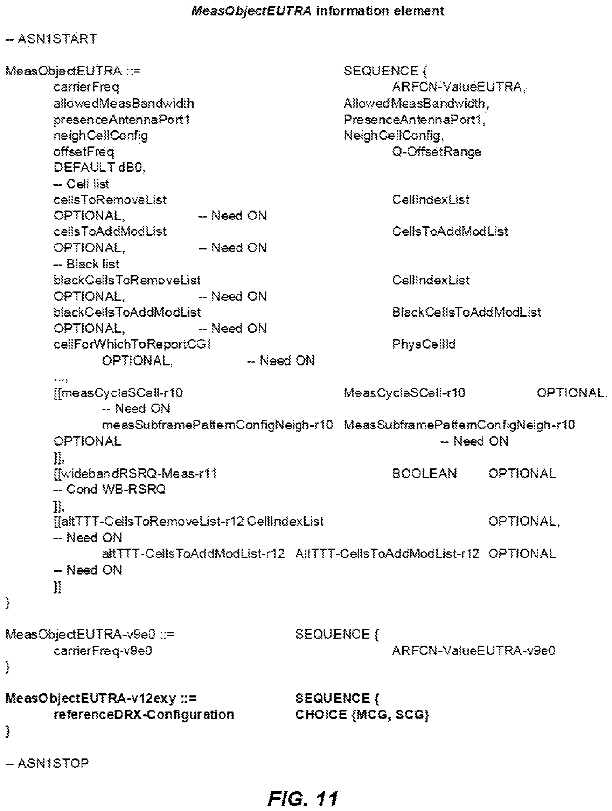

A possible signaling scheme for signaling the indicator of the at least one reference DRX cycle, or configuration, for a measurement object is illustrated in Figure 11. In this example, the network node provides an indication "reference-DRX-Configuration," which can take the value "MCG" or "SCG," within a measurement object Information Element (IE). If the network node indicates the MCG to the UE 12, or terminal, then the UE 12 uses the DRX configuration associated with the MCG as a reference when performing measurements. Conversely, if the network node indicates the SCG to the UE 12, then the UE 12 should use the DRX configuration associated with the SCG as a reference when performing measurements.

In some embodiments, the network node indicates to the UE 12 which DRX configuration to use as a reference DRX configuration for a measurement type. For example, the network node can indicate to the UE 12 that, for measurements performed for the purpose of positioning, the UE 12 shall apply DRX configuration X. This would require the UE 12 to be made aware of the purpose of the measurements. This could be indicated as a flag in the measurement configuration. Alternatively, to hide the purpose of the measurements from the UE 12, the network node may assign a group identity for measurements and associate a DRX configuration with each group identity. For example, the network node may assign a measurement to a group index I and then indicate that for group index I, the UE 12 shall use DRX configuration X as a reference DRX configuration.

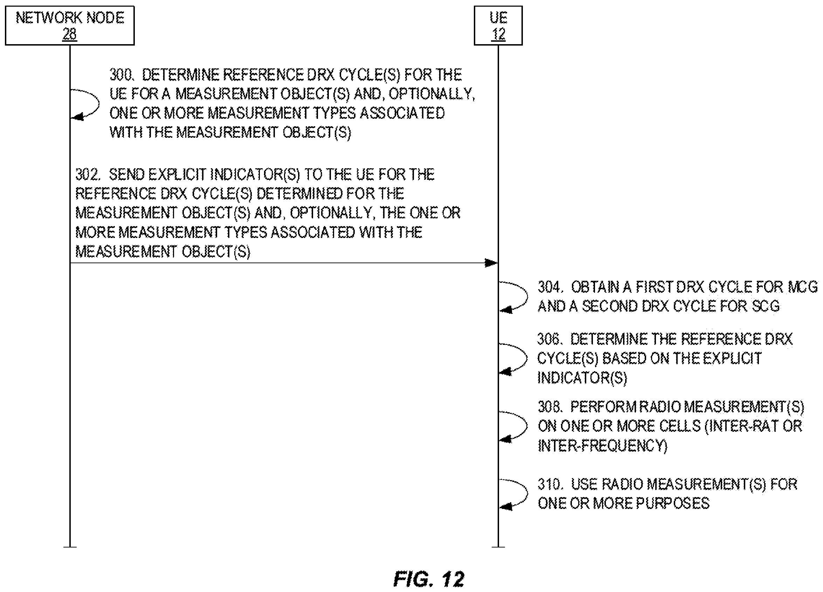

The operation of a network node 28 and the UE 12 according to some embodiments of the present disclosure are illustrated in Figure 12. In particular, Figure 12 illustrates embodiments described above relating to the determination and use of at least one reference DRX cycle per measurement object or measurement type. As illustrated, the network node 28 determines at least one reference DRX cycle for the UE 12 for one or more measurement objects and/or one or more measurement types (step 300). Each reference DRX cycle may be either the DRX cycle configured for the MCG, the DRX cycle configured for the SCG, a function of the DRX cycle configured for the MCG, a function of the DRX cycle configured for the SCG, or a function of both the DRX cycle configured for the MCG and the DRX cycle configured for the SCG. As discussed below in detail, this determination may be made based on various criteria such as, e.g., measurement time, UE battery life and power consumption, and balancing of performance across measurement objects. As discussed above, in some embodiments, the network node 28 determines a reference DRX cycle, or configuration, for each of one or more measurement objects. Note that, in some embodiments, there can be two reference DRX cycles for a measurement object, namely, a short DRX cycle and a long DRX cycle, where the UE 12 can switch between the two based on its activity level. As also discussed above, in some embodiments, the network node 28 determines a reference DRX cycle, or configuration, for each of one or more measurement types, or measurement purposes.

In this embodiment, the network node 28 sends at least one explicit indicator to the UE 12 for the at least one reference DRX cycle determined for the one or more measurement objects and/or the one or more measurement types (step 302). As discussed above, in some embodiments, the at least one explicit indicator sent to the UE 12 includes one or more explicit indicators for one or more reference DRX cycles for one or more measurement objects. Thus, for example, if there are two measurement objects, the network node 28 may send, to the UE 12, a first explicit indicator for a first reference DRX cycle for the first measurement object and a second explicit indicator for a second reference DRX cycle for the second measurement object. In some particular embodiments, the at least one explicit indicator is sent to the UE 12 in an IE(s) associated with the measurement object(s).

In other embodiments, the at least one reference DRX cycle is, or includes, at least one reference DRX cycle for one or more measurement types, or measurement purposes. In these embodiments, at least one explicit indicator for the one or more DRX cycles for the one or more measurement types may be sent to the UE 12 using any suitable technique. For example, explicit indicators may be communicated together with other configurations for the measurements. As discussed above, in some embodiments, it may be desirable to keep from notifying the UE 12 of the measurement type, or measurement purpose, of the different radio measurements. In this case, the different measurement types can be associated with different measurement groups, where the measurement groups are associated with corresponding reference DRX cycles. In other words, in some embodiments, the network node 28 sends at least one explicit indicator for at least one reference DRX cycle to the UE 12 for at least one measurement type. In addition, the network node 28 informs the UE 12 of the measurement type of the different measurements. As discussed below, the UE 12 can then determine the reference DRX cycle for a particular measurement based on the explicit indicator for the corresponding measurement type. In other embodiments, the network node 28 sends at least one explicit indicator for at least one reference DRX cycle to the UE 12 for one or more measurement groups. In addition, the network node 28 informs the UE 12 of the measurement group of the different measurements, e.g., in the associated measurement configurations. As discussed below, the UE 12 can then determine the reference DRX cycle for a particular measurement based on the explicit indicator for the corresponding measurement group.

At the UE 12, in addition to receiving, or obtaining, the at least one explicit indicator from the network node 28, the UE 12 obtains a first DRX cycle for the MCG of the UE 12 and a second DRX cycle for a SCG of the UE 12 (step 304). The UE 12 then determines the at least one reference DRX cycle based on the at least one explicit indicator (step 306). For example, if one of the explicit indicators indicates that, for a particular measurement object, the DRX cycle configured for the MCG is to be used as the reference DRX cycle for that measurement object, the UE 12 determines that the obtained the DRX cycle for the MCG is the reference DRX cycle for the measurement object. The UE 12 performs one or more radio measurements on one or more cells (e.g., one or more inter-frequency cells and/or inter-RAT cells) based on the determined reference DRX cycle(s) (step 308). Optionally, the UE 12 uses the performed radio measurements for one or more purposes (e.g., cell reselection, reporting to the network node 28, positioning, etc.) (step 310).

In the embodiments above, the network node 28 determines the reference DRX cycle(s) for the UE 12 and sends a corresponding explicit indicator(s) to the UE 12. However, in some other embodiments, the UE 12 determines at least one reference DRX cycle based on one or more rules. For example, a predefined rule may define a default DRX configuration. In this case, the UE 12 uses one DRX configuration as the default reference DRX configuration for doing measurements on inter-frequency and/or inter-RAT carriers. If the network node 28 does not indicate which DRX configuration should be the reference DRX configuration for a measurement object, then the UE 12 will use the default DRX configuration as the reference. This allows for less signaling as the network node 28 may omit the indication of which DRX configuration should be used as reference in case the default reference DRX configuration is suitable for a measurement object. The default reference DRX configuration may be the same or different for different types of measurements. For example, default reference DRX configuration # 1 and default reference DRX configuration # 2 may be used for measuring on inter-frequency carriers and inter-RAT carriers, respectively. Default reference DRX configuration # 1 and default reference DRX configuration # 2 may be the DRX cycles configured for the MCG and the SCG, respectively, or vice versa. In yet another example, default reference DRX configuration # 1 and default reference DRX configuration # 2 may be used for positioning measurements (e.g., RSTD, E-CID, UE RX-TX time difference, etc.) and for mobility measurements (e.g., inter-frequency RSRP/RSRQ and inter-RAT measurements), respectively.

Which DRX configuration should be used as the default reference DRX configuration may be determined based on a predefined rule, for example, to be the DRX configuration of a certain CG such as the MCG or the SCG. Also, the mapping between different types of measurements and the corresponding default reference DRX configurations to be used can also be realized by predefined rule(s). It may also be that the network node 28 indicates which DRX configuration shall be used as the default reference DRX configuration. The network node 28 may provide this indication when configuring the UE 12 with DRX configuration(s).

In yet another example of the predefined rule, the UE 12 may autonomously determine the reference DRX cycle to be used for doing measurements based on a function which contains at least DRX cycle # 1 and DRX cycle # 2 configured for the MCG and the SCG, respectively. An example of this function is: K = f(DRX1, DRX2); where K is used to allocate time used by carriers for measurement. K can be a UE implementation or predefined. More generally, any function k = f(DRX1, DRX2, Nfreq) could be considered as a method for splitting measurement objects between the two configured DRX cycles, where Nfreq is the number of frequencies or frequency layers on which the UE 12 is configured to measure. The UE 12 derives and uses K as described below. The value of K can also be used by a network node to configure DRX cycles for different carriers as described below.

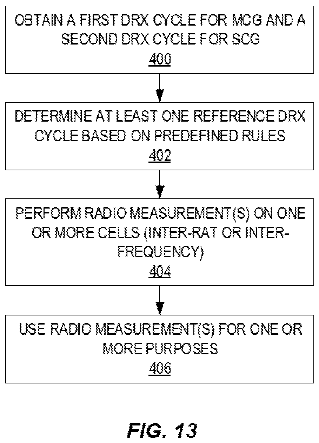

The operation of the UE 12 according to some other embodiments of the present disclosure are illustrated in Figure 13. In particular, Figure 13 illustrates embodiments described above relating to the determination and use of at least one reference DRX cycle per measurement object or measurement type at the UE 12 based on one or more rules. As illustrated, the UE 12 obtains a first DRX cycle for the MCG of the UE 12 and a second DRX cycle for the SCG of the UE 12 (step 400). The UE 12 then determines at least one reference DRX cycle based on one or more rules, which may be predefined or configured by a network node (step 402). As discussed above, the one or more rules may be predefined or configured by a network node. Further, the one or more rules may include one or more rules for determining a reference DRX cycle for one or more measurement objects and/or one or more rules for determining the reference DRX cycle for one or more measurement types, or measurement purposes. For example, for a measurement object, a rule may state that the default reference DRX cycle is to be used unless a reference DRX cycle for the measurement object is configured by a network node. As another example, for a measurement type, a rule may state that the default reference DRX cycle is to be used unless a reference DRX cycle for the measurement type is configured by a network node. The default reference DRX cycle may be predefined or configured by a network node. The UE 12 performs one or more radio measurements on one or more cells (e.g., one or more inter-frequency cells and/or inter-RAT cells) based on the determined reference DRX cycle(s) (step 404). Optionally, the UE 12 uses the performed radio measurements for one or more purposes (e.g., cell reselection, reporting to the network node 28, positioning, etc.) (step 406).

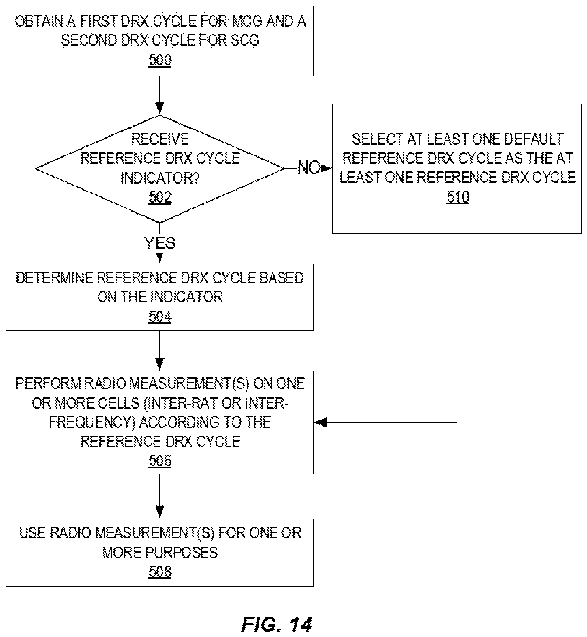

Figure 14 is a flowchart that illustrates the operation of the UE 12 to determine a reference DRX cycle based on a predefined rule according to some embodiments of the present disclosure. In this embodiment, the predefined rule is a rule that a default reference DRX cycle is to be used unless a reference DRX cycle is configured by a network node. As illustrated, the UE 12 obtains a first DRX cycle for the MCG of the UE 12 and a second DRX cycle for the SCG of the UE 12 (step 500). When desiring to perform a measurement for a measurement object or a measurement type, depending on the particular embodiment, the UE 12 determines whether a reference DRX cycle indicator has been received by the UE 12 from a network node (step 502). Here, the reference DRX cycle indicator may be, for example, an explicit indicator of the DRX cycle for the measurement object or the measurement type as described above with respect to Figure 12.

If the UE 12 has received the reference DRX cycle indicator, the process proceeds as described above with respect to Figure 12. The UE 12 determines the reference DRX cycle based on the reference DRX cycle indicator (step 504). The UE 12 performs one or more radio measurements on one or more cells (e.g., one or more inter-frequency cells and/or inter-RAT cells) based on the determined reference DRX cycle (step 506). Optionally, the UE 12 uses the performed radio measurements for one or more purposes (e.g., cell reselection, reporting to the network node 28, positioning, etc.) (step 508).

Returning to step 502, if the UE 12 has not received a reference DRX cycle indicator, the UE 12 selects a default reference DRX cycle as the reference DRX cycle for the measurement type or measurement object (step 510). The UE 12 performs one or more radio measurements on one or more cells (e.g., one or more inter-frequency cells and/or inter-RAT cells) based on the determined reference DRX cycle (step 506). Optionally, the UE 12 uses the performed radio measurements for one or more purposes (e.g., cell reselection, reporting to the network node 28, positioning, etc.) (step 508). Notably, in Figure 14, steps 502, 504, and 510 correspond to one embodiment of step 402 of Figure 13.

Reference DRX Cycle Configuration Per Group of Carriers

In Release 12 of the LTE standards, two performance groups have been defined - a normal performance group and a reduced performance group. Each of the normal performance group and a reduced performance group contain a set of inter-frequency carriers and/or inter-RAT carriers which are to be used by the UE for measurements. The term carrier or frequency carrier is also interchangeably referred to as a layer, frequency layer, or carrier frequency layer. The UE receives information about carriers (e.g., Absolute Frequency Channel Number (ARFCN)) of carriers and their associated groups in a measurement configuration.

Normal performance can be configured for any measurement object, whereas reduced performance can be configured for LTE Frequency Division Duplexing (FDD), LTE Time Division Duplexing (TDD), Universal Terrestrial Radio Access (UTRA) FDD, or UTRA TDD measurement objects. When a measurement object is configured to belong to the reduced performance group, the required performance is substantially relaxed compared to reference performance (aka to reference measurement performance). An example of the reference performance is the performance of the normal performance group. An example of relaxed or reduced performance is longer measurement time. This is explained with the following example. A certain measurement(s) (e.g., RSRP or RSRQ) is required to be done on carrier(s) belonging to the normal performance group within a first measurement period (T1) while the same measurement(s) (e.g., RSRP or RSRQ) is required to be done on carriers) belonging to a reduced performance group within a second measurement period (T2), wherein T1 < T2. Since measurement opportunities are shared between measurement objects, the purpose of this relaxation is to ensure that measurement objects in the normal performance group can be measured with relatively short delay requirements.

In general, in some embodiments, the UE 12 is configured with DC and different DRX cycles for the MCG and the SCG, and the UE 12 obtains DRX cycle configuration per group of carriers where each group contains one or more carriers. Typically, the performances of carriers in the same group are relaxed by the same proportion or factor, e.g. measurement time is X times that of the reference measurement time. As an example, DRX cycle configuration # 1 and DRX cycle configuration # 2 may be used for measurements on carriers belonging to the normal performance group and reduced performance groups, respectively. After obtaining the DRX cycle configuration per group of carriers, the UE 12 uses the obtained information for performing one or more measurements on the cells of the carriers belonging to the different groups, and uses the performed measurements for one or more objectives or tasks. Examples of such tasks are cell reselection, reporting measurement results to the network node, positioning, etc.

The embodiments of the present disclosure are described for DRX cycle configuration per group of carriers for two groups (the normal performance group and the reduced performance groups). But embodiments are also applicable for obtaining the DRX cycle configuration for a plurality of carrier groups (e.g., three or more groups), e.g. DRX cycle configuration # 1, DRX cycle configuration # 2, and DRX cycle configuration # 2 for carriers of the normal performance group, for carriers of a first reduced performance group and for carriers of a second reduced performance group, respectively.

The mapping between DRX cycle configurations and different groups of carriers can be obtained by the UE 12 based on any of the following mechanisms: a predefined rule and configuration from a network node. With regard to predefined rules, using this mechanism, the DRX cycle configurations to be used by the UE 12 for performing measurements on cells of carriers belonging to the normal performance group and on cells of carriers belonging to the reduced performance group are predefined. Several examples of such rules are as follows. For example, it may be predefined that the UE 12 shall use the DRX cycle configurations configured for CG # 1 and CG # 2 for measuring on carriers belonging to the normal performance group and the reduced performance group, respectively. In one example, CG # 1 and CG # 2 can be the MCG and the SCG, respectively.

In another example, CG # 1 and CG # 2 can be the SCG and the MCG, respectively. In another example, it may be predefined that the measurement objects in the normal performance group use the shorter of the MCG and the SCG DRX cycles as the reference DRX cycle, whereas measurement objects in the reduced performance group use the longer of the MCG and the SCG DRX cycles. This is because the measurement objects in the normal performance group are relatively urgent to measure, and the measurement objects in the reduced performance group are relatively less urgent to measure.

In yet another example, it may be predefined that the shorter of the MCG and the SCG DRX cycles is used as the reference DRX cycle for the performance group which contains fewer carriers (e.g., three), whereas the performance group which contains more carriers (e.g., five) uses the longer of the MCG and the SCG DRX cycles as the reference DRX cycle. In case both groups contain an equal number of carriers, then the UE 12 may use any rule in the examples above.

More than one rule may also be predefined. In this case, one of the predefined rules may be a default rule. The network node may also configure the UE 12 as to which of the two or more predefined rules to apply for determining the reference DRX cycle for different performance groups.

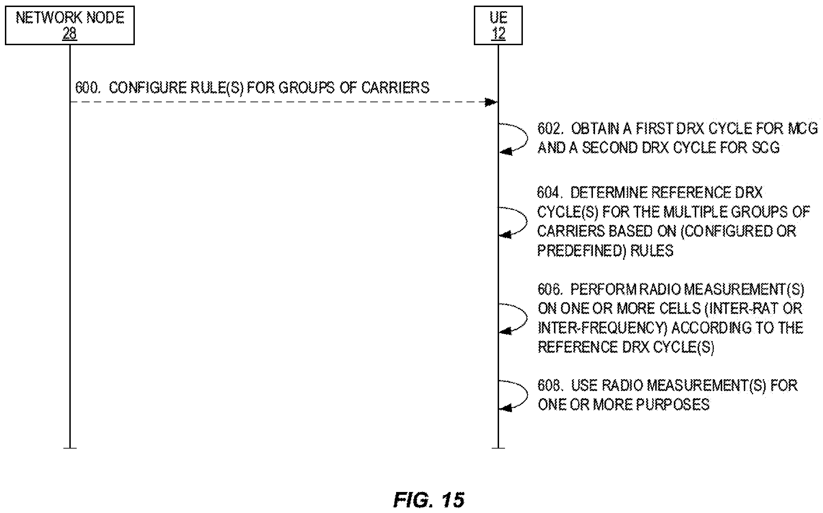

Figure 15 illustrates the operation of the network node 28 and the UE 12 according to some embodiments of the present disclosure in which the reference DRX cycle for groups of carriers is determined based on one or more rules. As illustrated, optionally (i.e., in some embodiments), the network node 28 configures one or more rules for determining a reference DRX cycle for each of multiple groups of carriers for the UE 12 (step 600). The groups of carriers may include, as discussed above, a normal performance group and a reduced performance group, as some examples. However, the present disclosure is not limited thereto. Notably, a single rule may be configured where this single rule may be used by the UE 12 to determine the reference DRX cycles for the multiple groups of carriers. However, in other embodiments, separate rules may be defined for different groups of carriers.

At the UE 12, the UE 12 obtains a first DRX cycle for the MCG and a second DRX cycle for the SCG (step 602). The UE 12 determines the reference DRX cycles for the multiple groups of carriers based on one or more rules (step 604). In some embodiments, the one or more rules are configured by the network node 28. In other embodiments, the one or more rules are predefined, e.g., via standard or by UE implementation. For each group of carriers for which the UE 12 desires to determine a reference DRX cycle, the UE 12 determines the reference DRX cycle for that group of carriers based on the corresponding rule(s). The UE 12 performs one or more radio measurements on one or more cells (e.g., one or more inter-frequency cells and/or inter-RAT cells) based on the determined reference DRX cycle for the corresponding group(s) of carriers (step 606). More specifically, if the UE 12 desires to perform a radio measurement on a particular inter-frequency cell or inter-RAT cell, the UE 12 performs the measurement based on the determined reference DRX cycle for the corresponding group of carriers. Optionally, the UE 12 uses the performed radio measurements for one or more purposes (e.g., cell reselection, reporting to the network node 28, positioning, etc.) (step 608).

In the embodiments described above, the UE 12 determines the reference DRX cycles for the groups of carriers based on the one or more rules. However, in other embodiments, a network node determines the reference DRX cycles for the groups of carriers. For instance, in some embodiments, if signaling allows separate indication of whether a measurement object has normal or reduced performance, and also the reference DRX cycle to which each measurement object is associated with, then the rule(s) for determining the reference DRX cycles for the different groups of carriers (e.g., the carriers in the different performance groups) may be implemented by a network node. The signaling mechanism gives more flexibility to the network node in choosing the reference DRX cycles for normal and reduced performance groups. For example, the network node may explicitly inform the UE 12 via signaling that: measurement objects in the normal performance group are configured to use the shorter of the MCG and the SCG DRX cycles as the reference DRX cycle and measurement objects in the reduced performance group are configured to use the longer of the MCG and the SCG DRX cycles as the reference DRX cycle.

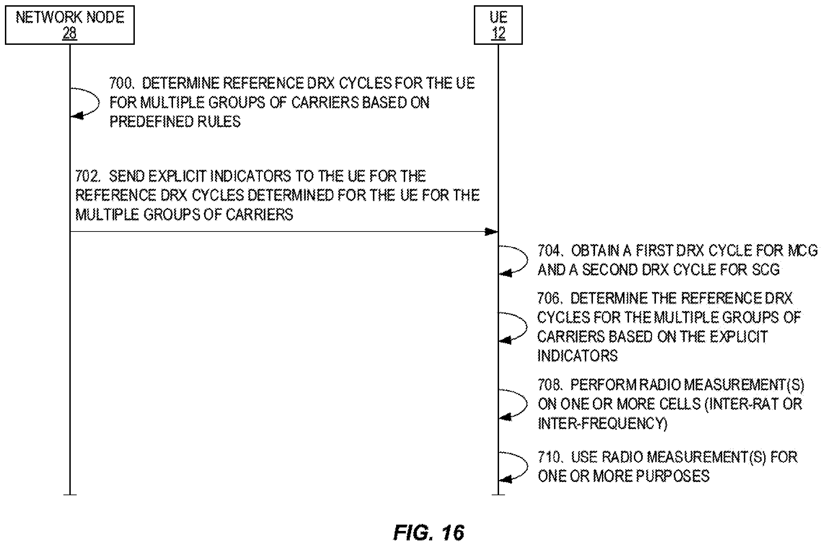

Figure 16 illustrates the operation of the network node 28 and the UE 12 according to some embodiments of the present disclosure in which the network node 28 implements the one or more rules for determining reference DRX cycles for multiple groups of carriers. As illustrated, the network node 28 determines reference the RX cycles for the UE 12 for multiple groups of carriers based on one or more predefined rules (step 700). The network node 28 sends, in this example, explicit indicators to the UE 12 for the reference DRX cycles determined for the UE 12 for the multiple groups of carriers (step 702). The explicit indicators may be sent to the UE 12 using any appropriate signaling technique.

At the UE 12, the UE 12 obtains a first DRX cycle for the MCG and a second DRX cycle for the SCG (step 704). The UE 12 determines the reference DRX cycles for the multiple groups of carriers based on the explicit indicators received from the network node 28 (step 706). For example, the explicit indicator for a particular group of carriers may indicate that the DRX cycle for the MCG is to be used as the reference DRX cycle for that group of carriers. In this case, in step 706, the UE 12 determines that the DRX cycle obtained for the MCG in step 704 is the reference DRX cycle for that group of carriers. The UE 12 performs one or more radio measurements on one or more cells (e.g., one or more inter-frequency cells and/or inter-RAT cells) based on the determined reference DRX cycle for the corresponding group(s) of carriers (step 708). More specifically, if the UE 12 desires to perform a radio measurement on a particular inter-frequency cell or inter-RAT cell, the UE 12 performs the measurement based on the determined reference DRX cycle for the corresponding group of carriers. Optionally, the UE 12 uses the performed radio measurements for one or more purposes (e.g., cell reselection, reporting to the network node 28, positioning, etc.) (step 710).

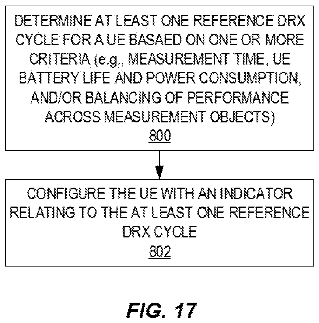

Embodiments are described above in which the network node 28 determines at least one reference DRX cycle for the UE 12. In this regard, Figure 17 illustrates the operation of the network node 28 to determine and configure at least one reference DRX cycle for the UE 12 according to some embodiments of the present disclosure. As illustrated, the network node determines at least one reference DRX cycle for the UE 12 based on one or more criteria (step 800). Some non-limiting examples of criteria are: measurement time, UE battery life and power consumption, and balancing of performance across measurement objects, each of which is discussed below in more detail. The network node 28 configures the UE 12 with an indicator relating to the at least one reference DRX cycle determined for the UE 12, as described above (step 802).

With regard to measurement time, the measurement time means how quickly the measurement can be done (e.g., 480 ms for inter-frequency RSRP). If measurements are needed quickly (i.e., over a shorter time), the network node 28 may configure the UE 12 to use a DRX configuration (i.e., configure a reference DRX cycle) with short periodicity such that the measurements will be completed faster and, hence, the network node 28 will receive the measurements quickly. The measurement time is typically predefined and is the duration over which the UE is required to perform one or more measurements. Examples of measurement time are physical layer measurement period for RSRP and RSRQ, cell identification delay, CGI identification delay, etc. For example, if the network node 28 is configuring a measurement for the sake of finding a suitable cell for a handover, then it is often critical that the measurements are received with short delay so as to avoid, e.g., radio link failure. On the other hand, if the measurements are not needed as urgently, the network node 28 may configure the UE 12 to use the DRX configuration with a longer periodicity which will result in longer delay for receiving the measurements, while allowing the UE 12 to save more power. For example, if the network node 28 configures the measurements for the sake of adding a potential SCell to the aggregation set (e.g., MCG or SCG) of the UE 12, then the measurement may not be very time critical; hence, the UE 12 could be given longer time to perform the measurements.

With regard to UE battery life and power consumption, a longer reference DRX cycle (e.g., 1280 ms) used for measurements consumes less UE battery power compared to the use of a shorter DRX cycle (e.g., 320 ms) for the same type of measurements, e.g. inter-frequency RSRP and RSRQ. In case UE battery is low or below a threshold (e.g., below 30%), then the network node 28 may configure a longer DRX cycle (i.e., the longer of the MCG and the SCG DRX cycles) as a reference DRX cycle for all or at least N (KN ≥ 1) number of carriers on which the UE 12 does measurements. Otherwise, the network node 28 may configure the UE 12 with a shorter DRX cycle (i.e., the shorter of the MCG and the SCG DRX cycles) as a reference DRX cycle for all or at least K (K ≥ 1) number of carriers on which the UE 12 does measurements.

With regard to balancing of performance across management objects, in some scenarios, it may be desirable to achieve a balanced performance (i.e., similar or equal delays for each measurement object). This may be achieved by considering the DRX cycle length of the MCG and the SCG DRX cycles, and allocating a certain number of measurement objects to use the MCG DRX as a reference and a certain number of measurement objects to use the SCG DRX as a reference, with a criteria to achieve the same or similar performance between measurement objects allocated to each reference DRX cycle.

Suppose that k frequency layers use the shorter DRX cycle, the cycle length of which is denoted as DRX1 as the reference DRX, and that the remaining Nfreq-k frequency layers use the longer DRX cycle, the cycle length of which is denoted as DRX2 as the reference DRX, then balanced performance is achieved by setting

$$k = \frac{N_{freq}}{\frac{DRX1}{DRX2} + 1}$$

In practice, since k should be an integer, this value may be rounded upwards, or downwards, or to the nearest integer. In case k is rounded, the performance between layers that use DRX1 as the reference DRX and layers that use DRX2 as the reference DRX will be approximately but not exactly balanced.

More generally, any function k = f(DRX1, DRX2, Nfreq) could be considered as a mechanism for splitting measurement objects between the two configured DRX cycles. The computation of k, and the assignment of layers to DRX cycles using the computed k, may be performed by either the UE or a network node.

In another scenario, it might be desirable to consider the measurements following the MCG DRX cycle (mDRX) and the SCG DRX cycle (sDRX), respectively, as separate measurement processes that are sharing a common set of measurement gaps. In this scenario, balancing may be achieved by distributing the measurement opportunities equally between these two processes. For DRX cycles that are powers of two of the same time base (10 or 16 ms) and exceed the measurement gap repetition period (40 or 80 ms), there are

$$ m = max\left(\frac{mDRX}{sDRX}, \frac{sDRX}{mDRX}\right) $$

measurement gaps to be distributed with respect to the longest DRX cycle (mDRX or sDRX) when assuming aligned DRX cycles and at least one gap being used per ON-duration. At the same time, the number of measurements to do during the time period of the longest DRX cycle when following single connection legacy is

$$ n = 1 + m. $$

A fair share between the measurement processes for MCG and SCG, respectively, is:

$$ p = max\left(\frac{mDRX}{sDRX}, 1\right)/n, $$

Fraction of gaps to be used by MCG:                     and

$$ s = max\left(\frac{sDRX}{mDRX}, 1\right)/n. $$

Fraction of gaps to be used by SCG:

This furthermore means that existing requirements from legacy on time to trigger and/or time to report a newly detected cell is to be scaled by 1/p and 1/s for MCG and SCG, respectively.

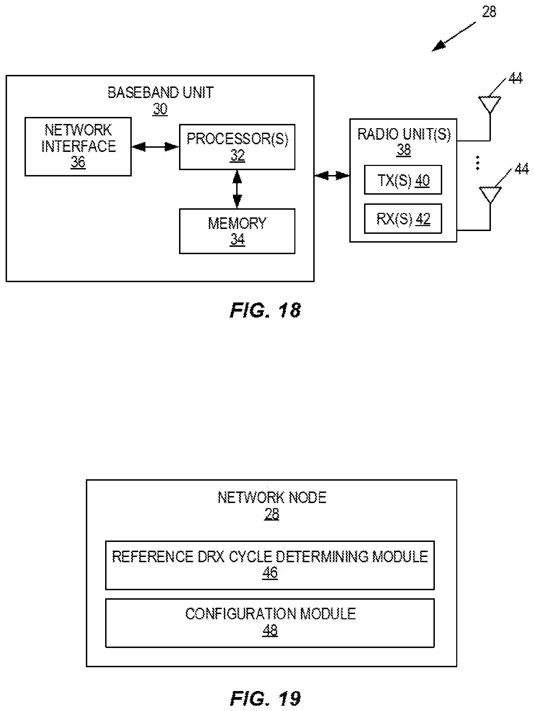

Figures 18 and 19 illustrate embodiments of the network node 28 according to some embodiments of the present disclosure. In this particular example, the network node 28 is either the MeNB 14 or the SeNB 16. However, this discussion also applies to other types of network nodes 28, where other types of network nodes may include additional components not illustrated in Figure 18 and/or may not include some of the components illustrated in Figure 18. As illustrated, the network node 28 includes a baseband unit 30 that includes one or more processors, or processor circuits, 32 (e.g., Central Processing Units (CPUs), Application Specific Integrated Circuits (ASICs), Field Programmable Gate Arrays (FPGAs), or the like), memory 34, and a network interface 36. The baseband unit 30 is connected to one or more radio units 38 that include one or more transmitters 40 and one or more receivers 42 coupled to one or more antennas 44. In some embodiments, the functionality of the network node 28 described herein may be implemented in software that is stored in the memory 34 and executed by the at least one processor 32, whereby the network node 28 provides the functionality described above.

In some embodiments, a computer program including instructions which, when executed by at least one processor, causes the at least one processor to carry out as least some of the functionality of the network node 28 according to any one of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 34).

Figure 19 is a block diagram of the network node 28 according to some other embodiments of the present disclosure. As illustrated, the network node 28 includes a reference DRX cycle determining module 46 and a configuration module 48, each of which is implemented in software. The reference DRX cycle determining module 46 operates to determine at least one reference DRX cycle for the UE 12 according to any of the embodiments described above. The configuration module 48 operates to configure the UE 12 with the determined at least one reference DRX cycle according to any of the embodiments described above.

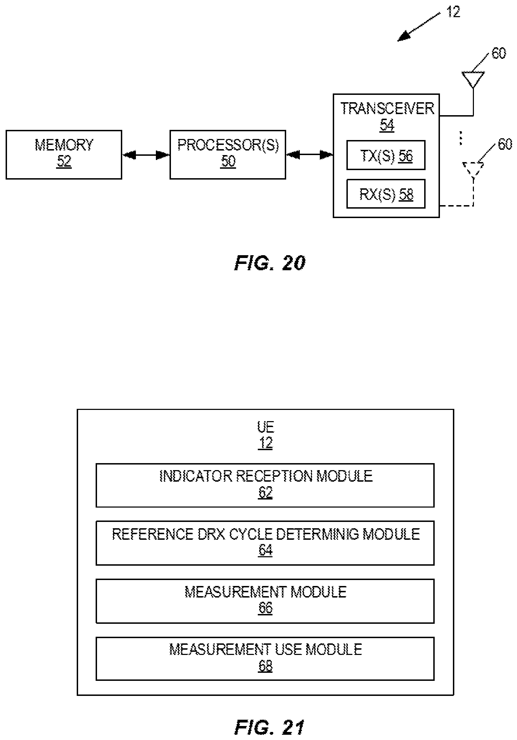

Figures 20 and 21 illustrate embodiments of the UE 12 according to some embodiments of the present disclosure. As illustrated, the UE 12 includes one or more processors, or processor circuits, 50 (e.g., CPUs, ASICs, FPGAs, or the like), memory 52, and a transceiver 54 including one or more transmitters 56 and one or more receivers 58 coupled to one or more antennas 60. In some embodiments, the functionality of the UE 12 described herein may be implemented in software that is stored in the memory 52 and executed by the at least one processor 50, whereby the UE 12 provides the functionality described above.

In some embodiments, a computer program including instructions which, when executed by at least one processor, causes the at least one processor to carry out as least some of the functionality of the UE 12 according to any one of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 52).

Figure 21 is a block diagram of the UE 12 according to some other embodiments of the present disclosure. As illustrated, in this example, the UE 12 includes an indicator reception module 62, a reference DRX cycle determining module 64, a measurement module 64, and a measurement use module 66, each of which is implemented in software. The indicator reception module 62 operates to receive at least one indicator (e.g., an explicit indicator) for determining at least one reference DRX cycle for the UE 12 according to any of the embodiments described above. The reference DRX cycle determining module 64 operates to determine at least one reference DRX cycle for the UE 12 according to any of the embodiments described above. The measurement module 66 operates to perform one or more radio measurements based on the at least one reference DRX cycle determined by the reference DRX cycle determining module 64, and the measurement use module 68 operates to use the performed radio measurements, as described above.

While not being limited to any particular advantages, some example advantages of a least some of the embodiments of the present disclosure are described below.

Embodiments described herein lead to flexibility in the network node 28 in terms of selecting DRX cycles for the UE 12 for performing measurements on different carriers. Embodiments described herein enable the network node 28 to configure shorter DRX cycles for carriers which can be potentially included in the MCG or the SCG. In this way serving cells within the MCG and the SCG can be quickly changed. Embodiments described herein enable the network node 28 to configure different DRX cycles for measuring on different carriers belonging to different performance groups. For example, shorter and longer DRX cycles can be configured for measuring on carriers belonging to normal and low performance groups respectively. Embodiments described herein enable UE power saving by configuring longer DRX cycles in case UE battery level is low or in case UE battery life needs to be extended or expected to last longer.

The following acronyms are used throughout this disclosure.

| | |
|---|---|
| • μs | Microsecond |
| • 3GPP | Third Generation Partnership Project |
| • ACK | Acknowledgement |
| • AP | Access Point |
| • ARFCN | Absolute Frequency Channel Number |
| • ASIC | Application Specific Integrated Circuit |
| • BLER | Block Error Rate |
| • BS | Base Station |
| • BSC | Base Station Controller |
| • BTS | Base Transceiver Station |
| • CA | Carrier Aggregation |
| • CC | Component Carrier |
| • CDMA | Code Division Multiple Access |
| • CFI | Control Format Indicator |
| • CG | Cell Group |
| • CGI | Cell Global Identification |
| • CPICH | Common Pilot Channel |
| • CPU | Central Processing Unit |
| • CQI | Channel Quality Indication |
| • CRS | Common Reference Symbol |
| • CSG | Closed Subscriber Group |
| • CSI | Channel State Information |
| • D2D | Device to Device |
| • DAS | Distributed Antenna System |
| • DC | Dual Connectivity |
| • DFT-spread | Discrete Fourier Transform Spread |

| | |
|---|---|
| • DRX | Discontinuous Reception |
| • DTX | Discontinuous Transmission |
| • E-CID | Enhanced Cell Identification |
| • EDGE | Enhanced Data Rates for Global System for Mobile Communications |
| • eNB | Enhanced or Evolved Node B |
| • E-SMLC | Evolved Serving Mobile Location Centre |
| • EUTRA | Evolved Universal Terrestrial Radio Access |
| • FDD | Frequency Division Duplexing |
| • FPGA | Field Programmable Gate Array |
| • GERAN | Global System for Mobile Communications Enhanced Data Rates for Global System for Mobile Communications Radio Access Network |
| • GSM | Global System for Mobile Communications |
| • HARQ | Hybrid Automatic Repeat Request |
| • HRPD | High Rate Packed Data |
| • HSPA | High Speed Packet Access |
| • IE | Information Element |
| • LEE | Laptop Embedded Equipment |
| • LME | Laptop Mounted Equipment |
| • LTE | Long Term Evolution |
| • M2M | Machine to Machine |
| • MAC | Medium Access Control |
| • MCG | Master/Main Cell Group |
| • MDT | Minimization of Drive Tests |
| • MeNB | Master/Main Enhanced or Evolved Node B |
| • MME | Mobility Management Entity |
| • ms | Millisecond |
| • MSC | Mobile Switching Centre |
| • MSR | Multi-Standard Radio |
| • NACK | Negative Acknowledgement |
| • O&M | Operation and Maintenance |
| • OFDM | Orthogonal Frequency Division Multiplexing |
| • OSS | Operations Support System |
| • OTDOA | Observed Time Difference of Arrival |
| • PCC | Primary Component Carrier |
| • PCell | Primary Cell |
| • PCHICH | Physical Control Format Indicator Channel |
| • PCI | Physical Cell Identity |
| • PDA | Personal Digital Assistant |
| • PDCCH | Physical Downlink Control Channel |
| • P-GW | Packet Data Network Gateway |
| • PHICH | Physical Hybrid Automatic Repeat Request Indication Channel |
| • PMI | Precoding Matrix Indicator |
| • PRB | Physical Resource Block |
| • PSCell | Primary Secondary Cell |
| • RAT | Radio Access Technology |
| • RB | Resource Block |
| • RI | Rank Indicator |
| • RIP | Received Interference Power |
| • RLM | Radio Link Monitoring |
| • RNC | Radio Network Controller |
| • R RC | Radio Resource Control |

(continued)

| | |
|---|---|
| • RRH | Remote Radio Head |
| • RRU | Remote Radio Unit |
| • RSCP | Received Signal Code Power |
| • RSRP | Reference Signal Received Power |
| • RSRQ | Reference Signal Received Quality |
| • RSSI | Received Signal Strength Indicator |
| • RSTD | Reference Signal Time Difference |
| • RTT | Round Trip Time |
| • RX | Receive |
| • SCC | Secondary Component Carrier |
| • SCell | Secondary Cell |
| • SCG | Secondary Cell Group |
| • SeNB | Secondary Enhanced or Evolved Node B |
| • S-GW | Serving Gateway |
| • SINR | Signal to interference Plus Noise Ratio |
| • SNR | Signal to Noise Ratio |
| • SON | Self-Organizing Network |
| • TDD | Time Division Duplexing |
| • TS | Technical Specification |
| • TX | Transmit |
| • TX/RX | Transceiver |
| • UE | User Equipment |
| • USB | Universal Serial Bus |
| • UTRA | Universal Terrestrial Radio Access |
| • Vo! P | Voice over Internet Protocol |
| • VRB | Virtual Resource Block |
| • WB-RSRQ | Wideband Reference Signal Received Quality |

Those skilled in the art will recognize improvements and modifications to the embodiments of the present disclosure. All such improvements and modifications are considered within the scope of the claims that follow.

**Claims**

1. A method of operation of a User Equipment device, UE, (12) comprising:

obtaining (200, 304) a first Discontinuous Reception, DRX, cycle for a Master Cell Group, MCG, of the UE (12) for a dual connectivity mode of operation and a second DRX cycle for a Secondary Cell Group, SCG, of the UE (12) for the dual connectivity mode of operation;
determining (204, 306) at least one reference DRX cycle for the UE (12), each of the at least one reference DRX cycle being one of a group consisting of: the first DRX cycle, the second DRX cycle, a function of the first DRX cycle, a function of the second DRX cycle, and a function of both the first DRX cycle and the second DRX cycle; wherein determining (204, 306) the at least one reference DRX cycle comprises determining (604, 706) at least one reference DRX cycle for each of two or more groups of carriers based on one or more rules implemented by, and received from, a network node if signaling allows separate indication of whether a measurement object comprises normal or reduced performance, wherein each measurement object is associated with at least one reference DRX cycle; and
performing (206, 308) one or more radio measurements on one or more cells based on the at least one reference DRX cycle, the one or more radio measurements being one or more inter-frequency radio measurements and/or one or more inter-Radio Access Technology, RAT, radio measurements.

2. The method of claim 1 further comprising:
obtaining (202) an indicator for determining the at least one reference DRX cycle; wherein determining (204, 306)

EP 3 195 688 B1

the at least one reference DRX cycle comprises determining (204, 306) the at least one reference DRX cycle based on the indicator.

3. The method of claim 1 wherein the at least one reference DRX cycle comprises at least one reference DRX cycle for at least one measurement object, and the method further comprises:

obtaining (302) one or more explicit indicators for the at least one reference DRX cycle for the at least one measurement object;
wherein determining (204, 306) the at least one reference DRX cycle comprises determining (306) the at least one reference DRX cycle for the at least one measurement object based on the one or more explicit indicators.

4. The method of claim 3 wherein: the one or more explicit indicators for the at least one reference DRX cycle for the at least one measurement object comprise one or more first explicit indicators for at least one first reference DRX cycle for a first measurement object and one or more second explicit indicators for at least one second reference DRX cycle for a second measurement object; and
determining (306) the at least one reference DRX cycle for the at least one measurement object based on the one or more explicit indicators comprises
determining the at least one first reference DRX cycle for the first measurement object based on the one or more first explicit indicators and determining the at least one second reference DRX cycle for the second measurement object based on the one or more second explicit indicators.

5. The method of claim 4 wherein the one or more first explicit indicators for the at least one first reference DRX cycle for the first measurement object comprise two or more explicit indicators for two or more measurement types for the first measurement object.

6. The method of claim 1 wherein performing (206, 308) the one or more radio measurements on the one or more cells comprises, for each group of carriers of the two or more groups of carriers, performing (606, 708) one or more radio measurements on one or more cells on one or more carriers in the group of carriers based on the at least one reference DRX cycle for the group of carriers.

7. The method of claim 1 further comprising:

obtaining (702) at least one explicit indicator from a network node (28) for determining the at least one reference DRX cycle for each of the two or more groups of carriers; wherein determining (706) the at least one reference DRX cycle for each of the two or more groups of carriers comprises determining (706) at least one reference DRX cycle for each of the two or more groups of carriers based on the at least one explicit indicator.

8. A User Equipment device, UE, (12) comprising: a transceiver (54);
at least one processor (50); and
memory (52) containing instructions executable by the at least one processor (50) whereby the UE (12) is operable to:

obtain (200, 304) a first Discontinuous Reception, DRX, cycle for a Master Cell Group, MCG, of the UE (12) for a dual connectivity mode of operation and a second DRX cycle for a Secondary Cell Group, SCG, of the UE (12) for the dual connectivity mode of operation;
determine (204, 306) at least one reference DRX cycle for the UE (12), each of the at least one reference DRX cycle being one of a group consisting of: the first DRX cycle, the second DRX cycle, a function of the first DRX cycle, a function of the second DRX cycle, and a function of both the first DRX cycle and the second DRX cycle; wherein determine (204, 306) the at least one reference DRX cycle comprises determine (604, 706) at least one reference DRX cycle for each of two or more groups of carriers based on one or more rules implemented by, and received from, a network node if signaling allows separate indication of whether a measurement object comprises normal or reduced performance, wherein each measurement object is associated with at least one reference DRX cycle; and
perform (206, 308) one or more radio measurements on one or more cells based on the at least one reference DRX cycle, the one or more radio measurements being one or more inter-frequency radio measurements and/or one or more inter-Radio Access Technology, RAT, radio measurements.

9. A method of operation of a network node (28) of a cellular communications network (10), comprising:

determining (100) at least one reference Discontinuous Reception, DRX, cycle for a User Equipment device, UE, (12) for a dual connectivity mode of operation for which the UE (12) is configured with a first DRX cycle for a Master Cell Group, MCG, of the UE (12) for the dual connectivity mode of operation and a second DRX cycle for a Secondary Cell Group, SCG, of the UE (12) for the dual connectivity mode of operation, each of the at least one reference DRX cycle being one of a group consisting of: the first DRX cycle, the second DRX cycle, a function of the first DRX cycle, a function of the second DRX cycle, and a function of both the first DRX cycle and the second DRX cycle; wherein determining (100) the at least one reference DRX cycle for the UE (12) comprises determining (700) at least one reference DRX cycle for the UE (12) for each of two or more groups of carriers based on one or more rules implemented, if signaling allows separate indication of whether a measurement object comprises normal or reduced performance, wherein each measurement object is associated with at least one reference DRX cycle; and

configuring (102) the UE (12) with an indicator relating to the at least one reference DRX cycle, the configuring (102) comprising sending (702), to the UE (12), at least one explicit indicator of the at least one reference DRX cycle for the UE (12) determined for each of the two or more groups of carriers.

10. The method of claim 9 wherein:

determining (100) the at least one reference DRX cycle for the UE (12) comprises determining (300) the at least one reference DRX cycle for the UE (12) for at least one measurement object;

wherein configuring (102) the UE (12) with the indicator relating to the at least one reference DRX cycle comprises sending (302), to the UE (12), at least one explicit indicator of the at least one reference DRX cycle for the UE (12) determined for the at least one measurement object.

11. The method of claim 10 wherein the at least one measurement object comprises a first measurement object and a second measurement object, and the at least one explicit indicator comprises one or more first explicit indicators for at least one first reference DRX cycle for the first measurement object and one or more second explicit indicators for at least one second reference DRX cycle for the second measurement object.

12. The method of claim 11 wherein determining (300) the at least one reference DRX cycle for the UE (12) for the at least one measurement object comprises:

determining a reference DRX cycle for each of two or more measurement types for the first measurement object; wherein the one or more first explicit indicators for the at least one first reference DRX cycle for the first measurement object comprise two or more explicit indicators for the two or more measurement types for the first measurement object.

13. A network node (28) comprising a baseband unit (30) that comprises: at least one processor (32); and memory (34) containing instructions executable by the at least one processor (32) whereby the network node (28) is operable to:

determine (100) at least one reference Discontinuous Reception, DRX, cycle for a User Equipment device, UE, (12) for a dual connectivity mode of operation for which the UE (12) is configured with a first DRX cycle for a Master Cell Group, MCG, of the UE (12) for the dual connectivity mode of operation and a second DRX cycle for a Secondary Cell Group, SCG, of the UE (12) for the dual connectivity mode of operation, each of the at least one reference DRX cycle being one of a group consisting of: the first DRX cycle, the second DRX cycle, a function of the first DRX cycle, a function of the second DRX cycle, and a function of both the first DRX cycle and the second DRX cycle; wherein determine (100) the at least one reference DRX cycle for the UE comprises determine (700) at least one reference DRX cycle for the UE for each of two or more groups of carriers based on one or more rules; wherein the one or more rules are implemented, if signaling allows separate indication of whether a measurement object comprises normal or reduced performance, wherein each measurement object is associated with at least one reference DRX cycle; and

configure (102) the UE (12) with an indicator relating to the at least one reference DRX cycle, the configuring (102) comprising sending (702), to the UE (12), at least one explicit indicator of the at least one reference DRX cycle for the UE (12) determined for each of the two or more groups of carriers.

**Patentansprüche**

1. Verfahren zur Bedienung eines Teilnehmergeräts (UE, User Equipment) (12), das Folgendes umfasst:

Erhalten (200, 304) eines ersten Diskontinuierlicher-Empfang (DRX, Discontinuous Reception)-Zyklus für eine Masterzellengruppe (MCG, Master Cell Group) des UE (12) für einen Duale-Konnektivität-Betriebsmodus und eines zweiten DRX-Zyklus für eine Sekundärzellengruppe (SCG, Secondary Cell Group) des UE (12) für den Duale-Konnektivität-Betriebsmodus;

Bestimmen (204, 306) mindestens eines Referenz-DRX-Zyklus für das UE (12), wobei jeder des mindestens einen Referenz-DRX-Zyklus einer aus einer Gruppe ist, die aus Folgendem besteht:

dem ersten DRX-Zyklus, dem zweiten DRX-Zyklus, einer Funktion des ersten DRX-Zyklus, einer Funktion des zweiten DRX-Zyklus und einer Funktion sowohl des ersten DRX-Zyklus als auch des zweiten DRX-Zyklus; wobei das Bestimmen (204, 306) des mindestens einen Referenz-DRX-Zyklus ein Bestimmen (604, 706) mindestens eines Referenz-DRX-Zyklus für jede der zwei oder mehreren Gruppen von Trägern umfasst, basierend auf einer oder mehreren Regeln, die durch einen Netzknoten implementiert und von diesem empfangen werden, wenn die Signalgebung eine getrennte Angabe davon gestattet, ob ein Messobjekt normale oder verringerte Leistung umfasst, wobei jedes Messobjekt mit mindestens einem Referenz-DRX-Zyklus assoziiert ist; und

Ausführen (206, 308) einer oder mehrerer Funkmessungen an einer oder mehreren Zellen, basierend auf dem mindestens einen Referenz-DRX-Zyklus, wobei die eine oder die mehreren Funkmessungen eine oder mehrere Interfrequenzfunkmessungen und/oder eine oder mehrere Inter-Funkzugangstechnik (RAT, Radio Access Technology) -Funkmessungen sind.

2. Verfahren nach Anspruch 1, das ferner Folgendes umfasst:
Erhalten (202) eines Indikators zum Bestimmen des mindestens einen Referenz-DRX-Zyklus; wobei das Bestimmen (204, 306) des mindestens einen Referenz-DRX-Zyklus ein Bestimmen (204, 306) des mindestens einen Referenz-DRX-Zyklus basierend auf dem Indikator umfasst.

3. Verfahren nach Anspruch 1, wobei der mindestens eine Referenz-DRX-Zyklus mindestens einen Referenz-DRX-Zyklus für mindestens ein Messobjekt umfasst und wobei das Verfahren ferner Folgendes umfasst:

Erhalten (302) eines oder mehrerer expliziter Indikatoren für den mindestens einen Referenz-DRX-Zyklus für das mindestens eine Messobjekt;
wobei das Bestimmen (204, 306) des mindestens einen Referenz-DRX-Zyklus ein Bestimmen (306) des mindestens einen Referenz-DRX-Zyklus für das mindestens eine Messobjekt basierend auf dem einen oder den mehreren expliziten Indikatoren umfasst.

4. Verfahren nach Anspruch 3, wobei: der eine oder die mehreren Indikatoren für den mindestens einen Referenz-DRX-Zyklus für das mindestens eine Messobjekt einen oder mehrere erste explizite Indikatoren für mindestens einen ersten Referenz-DRX-Zyklus für ein erstes Messobjekt und einen oder mehrere zweite explizite Indikatoren für mindestens einen zweiten Referenz-DRX-Zyklus für ein zweites Messobjekt umfassen; und
das Bestimmen (306) des mindestens einen Referenz-DRX-Zyklus für das mindestens eine Messobjekt basierend auf dem einen oder den mehreren expliziten Indikatoren Folgendes umfasst:
Bestimmen des mindestens einen ersten Referenz-DRX-Zyklus für das erste Messobjekt basierend auf dem einen oder den mehreren ersten expliziten Indikatoren und Bestimmen des mindestens einen zweiten Referenz-DRX-Zyklus für das zweite Messobjekt basierend auf dem einen oder den mehreren zweiten expliziten Indikatoren.

5. Verfahren nach Anspruch 4, wobei der eine oder die mehreren ersten expliziten Indikatoren für den mindestens einen ersten Referenz-DRX-Zyklus für das erste Messobjekt zwei oder mehrere explizite Indikatoren für zwei oder mehrere Messungstypen für das erste Messobjekt umfassen.

6. Verfahren nach Anspruch 1, wobei das Ausführen (206, 308) der einen oder der mehreren Funkmessungen an der einen oder den mehreren Zellen für jede Gruppe von Trägern der zwei oder mehreren Gruppen von Trägern ein Ausführen (606, 708) einer oder mehrerer Funkmessungen an einer oder mehreren Zellen an einem oder mehreren Trägern in der Gruppe von Trägern, basierend auf dem mindestens einen Referenz-DRX-Zyklus für die Gruppe von Trägern, umfasst.

7. Verfahren nach Anspruch 1, das ferner Folgendes umfasst: Erhalten (702) mindestens eines expliziten Indikators von einem Netzknoten (28) zum Bestimmen des mindestens einen Referenz-DRX-Zyklus für jede der zwei oder mehreren Gruppen von Trägern; wobei das Bestimmen (706) des mindestens einen Referenz-DRX-Zyklus für jede der zwei oder mehreren Gruppen von Trägern ein Bestimmen (706) mindestens eines Referenz-DRX-Zyklus für jede der zwei oder mehreren Gruppen von Trägern, basierend auf dem mindestens einen expliziten Indikator, umfasst.

8. Teilnehmergerät (UE, User Equipment) (12), das Folgendes umfasst: einen Transceiver (54); mindestens einen Prozessor (50); und Speicher (52), der Anweisungen enthält, die von dem mindestens einen Prozessor (50) ausführbar sind, wobei das UE (12) zu Folgendem bedienbar ist:

Erhalten (200, 304) eines ersten Diskontinuierlicher-Empfang (DRX, Discontinuous Reception)-Zyklus für eine Masterzellengruppe (MCG, Master Cell Group) des UE (12) für einen Duale-Konnektivität-Betriebsmodus und eines zweiten DRX-Zyklus für eine Sekundärzellengruppe (SCG, Secondary Cell Group) des UE (12) für den Duale-Konnektivität-Betriebsmodus;

Bestimmen (204, 306) mindestens eines Referenz-DRX-Zyklus für das UE (12), wobei jeder des mindestens einen Referenz-DRX-Zyklus einer aus einer Gruppe ist, die aus Folgendem besteht: dem ersten DRX-Zyklus, dem zweiten DRX-Zyklus, einer Funktion des ersten DRX-Zyklus, einer Funktion des zweiten DRX-Zyklus und einer Funktion sowohl des ersten DRX-Zyklus als auch des zweiten DRX-Zyklus; wobei das Bestimmen (204, 306) des mindestens einen Referenz-DRX-Zyklus ein Bestimmen (604, 706) mindestens eines Referenz-DRX-Zyklus für jede der zwei oder mehreren Gruppen von Trägern umfasst, basierend auf einer oder mehreren Regeln, die durch einen Netzknoten implementiert und von diesem empfangen werden, wenn die Signalgebung eine getrennte Angabe davon gestattet, ob ein Messobjekt normale oder verringerte Leistung umfasst, wobei jedes Messobjekt mit mindestens einem Referenz-DRX-Zyklus assoziiert ist; und

Ausführen (206, 308) einer oder mehrerer Funkmessungen an einer oder mehreren Zellen, basierend auf dem mindestens einen Referenz-DRX-Zyklus, wobei die eine oder die mehreren Funkmessungen eine oder mehrere Interfrequenzfunkmessungen und/oder eine oder mehrere Inter-Funkzugangstechnik (RAT, Radio Access Technology) -Funkmessungen sind.

9. Verfahren zum Betrieb eines Netzknotens (28) eines zellulären Kommunikationsnetzes (10), das Folgendes umfasst: Bestimmen (100) mindestens eines ersten Referenz-Diskontinuierlicher-Empfang (DRX, Discontinuous Reception)-Zyklus für ein Teilnehmergerät (UE, User Equipment) (12) für einen Duale-Konnektivität-Betriebsmodus, für den das UE (12) mit mindestens einem ersten DRX-Zyklus für eine Masterzellengruppe (MCG, Master Cell Group) des UE (12) für den Duale-Konnektivität-Betriebsmodus und einem zweiten DRX-Zyklus für eine Sekundärzellengruppe (SCG, Secondary Cell Group) des UE (12) für den Duale-Konnektivität-Betriebsmodus konfiguriert ist, wobei jeder des mindestens einen Referenz-DRX-Zyklus einer aus einer Gruppe ist, die aus Folgendem besteht: dem ersten DRX-Zyklus, dem zweiten DRX-Zyklus, einer Funktion des ersten DRX-Zyklus, einer Funktion des zweiten DRX-Zyklus und einer Funktion sowohl des ersten DRX-Zyklus als auch des zweiten DRX-Zyklus; wobei das Bestimmen (100) des mindestens einen Referenz-DRX-Zyklus für das UE (12) ein Bestimmen (700) mindestens eines Referenz-DRX-Zyklus für das UE (12) für jede der zwei oder mehreren Gruppen von Trägern umfasst, basierend auf einer oder mehreren Regeln, die implementiert werden, wenn die Signalgebung eine getrennte Angabe davon gestattet, ob ein Messobjekt normale oder verringerte Leistung umfasst, wobei jedes Messobjekt mit mindestens einem Referenz-DRX-Zyklus assoziiert ist; und Konfigurieren (102) des UE (12) mit einem Indikator, der sich auf den mindestens einen Referenz-DRX-Zyklus bezieht, wobei das Konfigurieren (102) das Senden (702) mindestens eines expliziten Indikators des mindestens einen Referenz-DRX-Zyklus für das UE (12), der für jede der zwei oder mehreren Gruppen von Trägern bestimmt wird, an das UE (12) umfasst.

10. Verfahren nach Anspruch 9, wobei:

das Bestimmen (100) des mindestens einen Referenz-DRX-Zyklus für das UE (12) ein Bestimmen (300) des mindestens einen Referenz-DRX-Zyklus für das UE (12) für mindestens ein Messobjekt umfasst; wobei das Konfigurieren (102) des UE (12) mit dem Indikator in Bezug auf den mindestens einen Referenz-DRX-Zyklus ein Senden (302) mindestens eines expliziten Indikators des mindestens einen Referenz-DRX-Zyklus für das UE (12), der für das mindestens eine Messobjekt bestimmt wird, an das UE (12) umfasst.

11. Verfahren nach Anspruch 10, wobei das mindestens eine Messobjekt ein erstes Messobjekt und ein zweites Messobjekt umfasst und der mindestens eine explizite Indikator einen oder mehrere erste explizite Indikatoren für mindestens einen ersten Referenz-DRX-Zyklus für das erste Messobjekt und einen oder mehrere zweite explizite Indikatoren für mindestens einen zweiten Referenz-DRX-Zyklus für das zweite Messobjekt umfasst.

12. Verfahren nach Anspruch 11, wobei das Bestimmen (300) des mindestens einen Referenz-DRX-Zyklus für das UE

21

(12) für das mindestens eine Messobjekt Folgendes umfasst:

Bestimmen eines Referenz-DRX-Zyklus für jeden der zwei oder mehreren Messungstypen für das erste Messobjekt;
wobei der eine oder die mehreren ersten expliziten Indikatoren für den mindestens einen ersten Referenz-DRX-Zyklus für das erste Messobjekt zwei oder mehrere explizite Indikatoren für die zwei oder mehreren Messungstypen für das erste Messobjekt umfassen.

**13.** Netzknoten (28), der eine Basisbandeinheit (30) umfasst, die Folgendes umfasst: mindestens einen Prozessor (32); und Speicher (34), der Anweisungen enthält, die von dem mindestens einen Prozessor (32) ausführbar sind, wobei der Netzknoten (28) zu Folgendem bedienbar ist:

Bestimmen (100) mindestens eines ersten Referenz-Diskontinuierlicher-Empfang (DRX, Discontinuous Reception)-Zyklus für ein Teilnehmergerät (UE, User Equipment) (12) für einen Duale-Konnektivität-Betriebsmodus, für den das UE (12) mit mindestens einem ersten DRX-Zyklus für eine Masterzellengruppe (MCG, Master Cell Group) des UE (12) für den Duale-Konnektivität-Betriebsmodus und einem zweiten DRX-Zyklus für eine Sekundärzellengruppe (SCG, Secondary Cell Group) des UE (12) für den Duale-Konnektivität-Betriebsmodus konfiguriert ist, wobei jeder des mindestens einen Referenz-DRX-Zyklus einer aus einer Gruppe ist, die aus Folgendem besteht: dem ersten DRX-Zyklus, dem zweiten DRX-Zyklus, einer Funktion des ersten DRX-Zyklus, einer Funktion des zweiten DRX-Zyklus und einer Funktion sowohl des ersten DRX-Zyklus als auch des zweiten DRX-Zyklus; wobei das Bestimmen (100) des mindestens einen Referenz-DRX-Zyklus für das UE ein Bestimmen (700) mindestens eines Referenz-DRX-Zyklus für das UE (12) für jede der zwei oder mehreren Gruppen von Trägern umfasst, basierend auf einer oder mehreren Regeln; wobei die eine oder die mehreren Regeln implementiert werden, wenn die Signalgebung eine getrennte Angabe davon gestattet, ob ein Messobjekt normale oder verringerte Leistung umfasst, wobei jedes Messobjekt mit mindestens einem Referenz-DRX-Zyklus assoziiert ist; und
Konfigurieren (102) der UE (12) mit einem Indikator, der sich auf den mindestens einen Referenz-DRX-Zyklus bezieht, wobei das Konfigurieren (102) das Senden (702) mindestens eines expliziten Indikators des mindestens einen Referenz-DRX-Zyklus für das UE (12), der für jede der zwei oder mehreren Gruppen von Trägern bestimmt wird, an das UE (12) umfasst.

## Revendications

**1.** Procédé de fonctionnement d'un dispositif d'équipement utilisateur, UE, (12) comprenant :

l'obtention (200, 304) d'un premier cycle de réception discontinue, DRX, pour un groupe de cellules maîtres, MCG, de l'UE (12) pour un mode de fonctionnement à double connectivité et un second cycle DRX pour un groupe de cellules secondaires, SCG, de l'UE (12) pour le mode de fonctionnement à double connectivité ;
la détermination (204, 306) d'au moins un cycle DRX de référence pour l'UE (12), chacun de l'au moins un cycle DRX de référence faisant partie d'un groupe constitué par : le premier cycle DRX, le second cycle DRX, une fonction du premier cycle DRX, une fonction du second cycle DRX, et une fonction à la fois du premier cycle DRX et du second cycle DRX ; dans lequel la détermination (204, 306) de l'au moins un cycle DRX de référence comprend la détermination (604, 706) d'au moins un cycle DRX de référence pour chacun de deux ou plusieurs groupes de porteuses sur la base d'une ou plusieurs règles mises en œuvre par un nœud de réseau, et reçues à partir de ce dernier, si la signalisation permet une indication distincte du fait qu'un objet de mesure comprend des performances normales ou réduites, chaque objet de mesure étant associé à au moins un cycle DRX de référence ; et
l'exécution (206, 308) d'une ou plusieurs mesures radio sur une ou plusieurs cellules sur la base de l'au moins un cycle DRX de référence, l'une ou plusieurs mesures radio étant une ou plusieurs mesures radio inter-fréquences et / ou une ou plusieurs mesures radio de technologie d'accès inter-radio, RAT.

**2.** Procédé selon la revendication 1, comprenant en outre : l'obtention (202) d'un indicateur pour déterminer l'au moins un cycle DRX de référence ; dans lequel la détermination (204, 306) de l'au moins un cycle DRX de référence comprend la détermination (204, 306) de l'au moins un cycle DRX de référence sur la base de l'indicateur.

**3.** Procédé selon la revendication 1, dans lequel l'au moins un cycle DRX de référence comprend au moins un cycle DRX de référence pour au moins un objet de mesure, et le procédé comprend en outre :

l'obtention (302) d'un ou plusieurs indicateurs explicites pour l'au moins un cycle DRX de référence pour l'au moins un objet de mesure ;

dans lequel la détermination (204, 306) de l'au moins un cycle DRX de référence comprend la détermination (306) de l'au moins un cycle DRX de référence pour l'au moins un objet de mesure sur la base de l'un ou plusieurs indicateurs explicites.

4. Procédé selon la revendication 3, dans lequel : l'un ou plusieurs indicateurs explicites pour l'au moins un cycle DRX de référence pour l'au moins un objet de mesure comprennent un ou plusieurs premiers indicateurs explicites pour au moins un premier cycle DRX de référence pour un premier objet de mesure et un ou plusieurs seconds indicateurs explicites pour au moins un second cycle DRX de référence pour un second objet de mesure ; et

la détermination (306) de l'au moins un cycle DRX de référence pour l'au moins un objet de mesure sur la base de l'un ou plusieurs indicateurs explicites comprend

la détermination de l'au moins un premier cycle DRX de référence pour le premier objet de mesure sur la base de l'un ou plusieurs premiers indicateurs explicites et la détermination de l'au moins un second cycle DRX de référence pour le second objet de mesure sur la base de l'un ou plusieurs seconds indicateurs explicites.

5. Procédé selon la revendication 4, dans lequel l'un ou plusieurs premiers indicateurs explicites pour l'au moins un premier cycle DRX de référence pour le premier objet de mesure comprennent deux ou plusieurs indicateurs explicites pour deux ou plusieurs types de mesure pour le premier objet de mesure.

6. Procédé selon la revendication 1, dans lequel l'exécution (206, 308) de l'un ou plusieurs mesures radio sur l'un ou plusieurs cellules comprend, pour chaque groupe de porteuses des deux ou plusieurs groupes de porteuses, l'exécution (606, 708) d'une ou plusieurs mesures radio sur une ou plusieurs cellules sur une ou plusieurs porteuses du groupe de porteuses sur la base de l'au moins un cycle DRX de référence pour le groupe de porteuses.

7. Procédé selon la revendication 1, comprenant en outre : l'obtention (702) d'au moins un indicateur explicite à partir d'un nœud de réseau (28) pour déterminer l'au moins un cycle DRX de référence pour chacun des deux ou plusieurs groupes de porteuses ; dans lequel la détermination (706) de l'au moins un cycle DRX de référence pour chacun des deux ou plusieurs groupes de porteuses comprend la détermination (706) d'au moins un cycle DRX de référence pour chacun des deux ou plusieurs groupes de porteuses sur la base de l'au moins un explicite indicateur.

8. Dispositif d'équipement utilisateur, UE, (12) comprenant :

un émetteur-récepteur (54) ;
au moins un processeur (50) ; et
une mémoire (52) contenant des instructions exécutables par l'au moins un processeur (50) grâce à quoi l'UE (12) peut fonctionner pour :

obtenir (200, 304) un premier cycle de réception discontinue, DRX, pour un groupe de cellules maîtres, MCG, de l'UE (12) pour un mode de fonctionnement à double connectivité et un second cycle DRX pour un groupe de cellules secondaire, SCG, de l'UE (12) pour le mode de fonctionnement à double connectivité ; déterminer (204, 306) au moins un cycle DRX de référence pour l'UE (12), chacun de l'au moins un cycle DRX de référence faisant partie d'un groupe constitué par : le premier cycle DRX, le second cycle DRX, une fonction du premier cycle DRX, une fonction du second cycle DRX, et une fonction à la fois du premier cycle DRX et du second cycle DRX ; dans lequel la détermination (204, 306) de l'au moins un cycle DRX de référence comprend la détermination (604, 706) d'au moins un cycle DRX de référence pour chacun de deux ou plusieurs groupes de porteuses sur la base d'une ou plusieurs règles mises en œuvre par un nœud de réseau, et reçues à partir de ce dernier, si la signalisation permet une indication distincte du fait qu'un objet de mesure comprend des performances normales ou réduites, dans lequel chaque objet de mesure est associé à au moins un cycle DRX de référence ; et

effectuer (206, 308) une ou plusieurs mesures radio sur une ou plusieurs cellules sur la base de l'au moins un cycle DRX de référence, l'une ou plusieurs mesures radio étant une ou plusieurs mesures radio inter-fréquences et / ou une ou plusieurs mesures radio de technologie d'accès inter-radio, RAT.

9. Procédé de fonctionnement d'un nœud de réseau (28) d'un réseau de communication cellulaire (10), comprenant :

la détermination (100) d'au moins un cycle de réception discontinue de référence, DRX, pour un dispositif d'équipement utilisateur, UE, (12) pour un mode de fonctionnement à double connectivité pour lequel l'UE (12) est configuré avec un premier cycle DRX pour un groupe de cellules maîtres, MCG, de l'UE (12) pour le mode de fonctionnement à double connectivité et un second cycle DRX pour un groupe de cellule secondaire, SCG, de l'UE (12) pour le mode de fonctionnement à double connectivité, chacun de l'au moins un cycle DRX de référence faisant partie d'un groupe constitué par : le premier cycle DRX, le second cycle DRX, une fonction du premier cycle DRX, une fonction du second cycle DRX, et une fonction à la fois du premier cycle DRX et du second cycle DRX ; dans lequel la détermination (100) de l'au moins un cycle DRX de référence pour l'UE (12) comprend la détermination (700) d'au moins un cycle DRX de référence pour l'UE (12) pour chacun de deux ou plusieurs groupes de porteuses sur la base d'une ou plusieurs règles mis en œuvre, si la signalisation permet une indication séparée du fait qu'un objet de mesure comprend des performances normales ou réduites, dans lequel chaque objet de mesure est associé à au moins un cycle DRX de référence ; et
la configuration (102) de l'UE (12) avec un indicateur relatif à au moins un cycle DRX de référence, la configuration (102) comprenant l'envoi (702), à l'UE (12), d'au moins un indicateur explicite de l'au moins un cycle DRX de référence pour l'UE (12) déterminé pour chacun des deux ou plusieurs groupes de porteuses.

10. Procédé selon la revendication 9, dans lequel :

la détermination (100) de l'au moins un cycle DRX de référence pour l'UE (12) comprend la détermination (300) de l'au moins un cycle DRX de référence pour l'UE (12) pour au moins un objet de mesure ;
dans lequel la configuration (102) de l'UE (12) avec l'indicateur relatif à l'au moins un cycle DRX de référence comprend l'envoi (302), à l'UE (12), d'au moins un indicateur explicite de l'au moins un cycle DRX de référence pour le UE (12) déterminé pour l'au moins un objet de mesure.

11. Procédé selon la revendication 10, dans lequel l'au moins un objet de mesure comprend un premier objet de mesure et un second objet de mesure, et l'au moins un indicateur explicite comprend un ou plusieurs premiers indicateurs explicites pour au moins un premier cycle DRX de référence pour le premier objet de mesure et un ou plusieurs seconds indicateurs explicites pour au moins un second cycle DRX de référence pour le second objet de mesure.

12. Procédé selon la revendication 11, dans lequel la détermination (300) de l'au moins un cycle DRX de référence pour l'UE (12) pour l'au moins un objet de mesure comprend :

la détermination d'un cycle DRX de référence pour chacun de deux ou plusieurs types de mesure pour le premier objet de mesure ;
dans lequel l'un ou plusieurs premiers indicateurs explicites pour l'au moins un premier cycle DRX de référence pour le premier objet de mesure comprennent deux ou plusieurs indicateurs explicites pour les deux ou plusieurs types de mesure pour le premier objet de mesure.

13. Nœud de réseau (28) comprenant une unité de bande de base (30) qui comprend : au moins un processeur (32) ; et une mémoire (34) contenant des instructions exécutables par l'au moins un processeur (32) grâce à quoi le nœud de réseau (28) peut fonctionner pour :

déterminer (100) au moins un cycle de réception discontinue de référence, DRX, pour un dispositif d'équipement utilisateur, UE, (12) pour un mode de fonctionnement à double connectivité pour lequel l'UE (12) est configuré avec un premier cycle DRX pour un groupe de cellules maître, MCG, de l'UE (12) pour le mode de fonctionnement à double connectivité et un second cycle DRX pour un groupe de cellules secondaires, SCG, de l'UE (12) pour le mode de fonctionnement à double connectivité, chacun de l'au moins un cycle DRX de référence faisant partie d'un groupe constitué par : le premier cycle DRX, le second cycle DRX, une fonction du premier cycle DRX, une fonction du second cycle DRX, et une fonction à la fois du premier cycle DRX et du second cycle DRX ; dans lequel la détermination (100) de l'au moins un cycle DRX de référence pour l'UE comprend la détermination (700) d'au moins un cycle DRX de référence pour l'UE pour chacun de deux ou plusieurs groupes de porteuses sur la base d'une ou plusieurs règles ; dans lequel l'une ou plusieurs règles sont mises en œuvre, si la signalisation permet une indication séparée du fait qu'un objet de mesure comprend des performances normales ou réduites, dans lequel chaque objet de mesure est associé à au moins un cycle DRX de référence ; et configurer (102) l'UE (12) avec un indicateur relatif à l'au moins un cycle DRX de référence, la configuration (102) comprenant l'envoi (702), à l'UE (12), d'au moins un indicateur explicite du au moins un cycle DRX de référence pour l'UE (12) déterminé pour chacun des deux ou plusieurs groupes de porteuses.

$\Delta f = 15\ kHz$

ONE RESOURCE ELEMENT

ONE OFDM SYMBOL
INCLUDING CYCLIC PREFIX

*FIG. 1*

EP 3 195 688 B1

SUB-FRAME
$(T_{SUBFRAME} = 1 \text{ ms})$

#0    #1  ...    #9

RADIO FRAME $(T_{FRAME} = 10 \text{ ms})$

*FIG. 2*

ONE SUBFRAME

CONTROL REGION

REFERENCE SYMBOLS    CONTROL SIGNALING

*FIG. 3*

EP 3 195 688 B1

CAN BE LOCATED VERY
FAR FROM EACH OTHER

NON-IDEAL
BACKHAUL
MeNB          SeNB

NON-IDEAL
BACKHAUL
MeNB          SeNB

eNB

*FIG. 4*

*MRTD = MAXIMUM RECEIVE TIMING DIFFERENCE

FIG. 5

**FIG. 6**

**MAC-MainConfig information element**

```
DRX-Config ::=                    CHOICE {
    release                       NULL,
    setup                         SEQUENCE {
        onDurationTimer                   ENUMERATED {
                                          psf1, psf2, psf3, psf4, psf5,
psf6,
                                          psf8, psf10, psf20, psf30,
psf40,
                                          psf50, psf60, psf80, psf100,
                                          psf200},
```

*onDurationTimer*
Timer for DRX in TS 36.321 [6]. Value in number of PDCCH sub-frames. Value psf1 corresponds to 1 PDCCH sub-frame, psf2 corresponds to 2 PDCCH sub-frames and so on.

**FIG. 7**

EP 3 195 688 B1

*FIG. 8*

DETERMINE AT LEAST ONE REFERENCE DRX
CYCLE FOR A UE
100

CONFIGURE THE UE WITH AN INDICATOR
RELATING TO THE AT LEAST ONE REFERENCE
DRX CYCLE
102

*FIG. 9*

OBTAIN A FIRST DRX CYCLE FOR MCG AND A
SECOND DRX CYCLE FOR SCG
200

OBTAIN INDICATOR FOR DETERMINING AT
LEAST ONE REFERENCE DRX CYCLE
202

DETERMINE AT LEAST ONE REFERENCE DRX
CYCLE
204

PERFORM RADIO MEASUREMENT(S) ON ONE
OR MORE CELLS (INTER-RAT OR INTER-
FREQUENCY)
206

USE RADIO MEASUREMENT(S) FOR ONE OR
MORE PURPOSES
208

*FIG. 10*

*MeasObjectEUTRA* information element

```
-- ASN1START

MeasObjectEUTRA ::=                                  SEQUENCE {
        carrierFreq                                      ARFCN-ValueEUTRA,
        allowedMeasBandwidth                         AllowedMeasBandwidth,
        presenceAntennaPort1                         PresenceAntennaPort1,
        neighCellConfig                              NeighCellConfig,
        offsetFreq                                       Q-OffsetRange
        DEFAULT dB0,
        -- Cell list
        cellsToRemoveList                                CellIndexList
        OPTIONAL,            -- Need ON
        cellsToAddModList                                CellsToAddModList
        OPTIONAL,            -- Need ON
        -- Black list
        blackCellsToRemoveList                           CellIndexList
        OPTIONAL,            -- Need ON
        blackCellsToAddModList                           BlackCellsToAddModList
        OPTIONAL,            -- Need ON
        cellForWhichToReportCGI                          PhysCellId
                OPTIONAL,            -- Need ON

        ...,
        [[measCycleSCell-r10                         MeasCycleSCell-r10          OPTIONAL,
                -- Need ON
                measSubframePatternConfigNeigh-r10  MeasSubframePatternConfigNeigh-r10
        OPTIONAL                                                         -- Need ON
        ]],
        [[widebandRSRQ-Meas-r11                          BOOLEAN     OPTIONAL
        -- Cond WB-RSRQ
        ]],
        [[altTTT-CellsToRemoveList-r12 CellIndexList                     OPTIONAL,
        -- Need ON
                altTTT-CellsToAddModList-r12  AltTTT-CellsToAddModList-r12  OPTIONAL
        -- Need ON
        ]]
}

MeasObjectEUTRA-v9e0 ::=                         SEQUENCE {
        carrierFreq-v9e0                                 ARFCN-ValueEUTRA-v9e0
}

MeasObjectEUTRA-v12exy ::=                       SEQUENCE {
        referenceDRX-Configuration               CHOICE {MCG, SCG}
}

-- ASN1STOP
```

*FIG. 11*

```
┌─────────────────────┐                                    ┌──────────┐
│  NETWORK NODE       │                                    │   UE     │
│       28            │                                    │   12     │
└─────────────────────┘                                    └──────────┘
```

300. DETERMINE REFERENCE DRX CYCLE(S) FOR THE
UE FOR A MEASUREMENT OBJECT(S) AND, OPTIONALLY,
ONE OR MORE MEASUREMENT TYPES ASSOCIATED
WITH THE MEASUREMENT OBJECT(S)

302. SEND EXPLICIT INDICATOR(S) TO THE UE FOR THE
REFERENCE DRX CYCLE(S) DETERMINED FOR THE
MEASUREMENT OBJECT(S) AND, OPTIONALLY, THE ONE OR
MORE MEASUREMENT TYPES ASSOCIATED WITH THE
MEASUREMENT OBJECT(S)

304. OBTAIN A FIRST DRX CYCLE FOR MCG
AND A SECOND DRX CYCLE FOR SCG

306. DETERMINE THE REFERENCE DRX
CYCLE(S) BASED ON THE EXPLICIT
INDICATOR(S)

308. PERFORM RADIO MEASUREMENT(S)
ON ONE OR MORE CELLS (INTER-RAT OR
INTER-FREQUENCY)

310. USE RADIO MEASUREMENT(S) FOR
ONE OR MORE PURPOSES

*FIG. 12*

OBTAIN A FIRST DRX CYCLE FOR MCG AND A
SECOND DRX CYCLE FOR SCG
400

DETERMINE AT LEAST ONE REFERENCE DRX
CYCLE BASED ON PREDEFINED RULES
402

PERFORM RADIO MEASUREMENT(S) ON ONE
OR MORE CELLS (INTER-RAT OR INTER-
FREQUENCY)
404

USE RADIO MEASUREMENT(S) FOR ONE OR
MORE PURPOSES
406

*FIG. 13*

OBTAIN A FIRST DRX CYCLE FOR MCG AND A
SECOND DRX CYCLE FOR SCG
500

RECEIVE
REFERENCE DRX CYCLE
INDICATOR?
502

NO → SELECT AT LEAST ONE DEFAULT
REFERENCE DRX CYCLE AS THE AT
LEAST ONE REFERENCE DRX CYCLE
510

YES

DETERMINE REFERENCE DRX CYCLE BASED
ON THE INDICATOR
504

PERFORM RADIO MEASUREMENT(S) ON ONE
OR MORE CELLS (INTER-RAT OR INTER-
FREQUENCY) ACCORDING TO THE
REFERENCE DRX CYCLE
506

USE RADIO MEASUREMENT(S) FOR ONE OR
MORE PURPOSES
508

*FIG. 14*

NETWORK NODE 28

UE 12

600. CONFIGURE RULE(S) FOR GROUPS OF CARRIERS

602. OBTAIN A FIRST DRX CYCLE FOR MCG AND A SECOND DRX CYCLE FOR SCG

604. DETERMINE REFERENCE DRX CYCLE(S) FOR THE MULTIPLE GROUPS OF CARRIERS BASED ON (CONFIGURED OR PREDEFINED) RULES

606. PERFORM RADIO MEASUREMENT(S) ON ONE OR MORE CELLS (INTER-RAT OR INTER-FREQUENCY) ACCORDING TO THE REFERENCE DRX CYCLE(S)

608. USE RADIO MEASUREMENT(S) FOR ONE OR MORE PURPOSES

*FIG. 15*

NETWORK NODE
28

UE
12

700. DETERMINE REFERENCE DRX CYCLES FOR THE UE
FOR MULTIPLE GROUPS OF CARRIERS BASED ON
PREDEFINED RULES

702. SEND EXPLICIT INDICATORS TO THE UE FOR THE
REFERENCE DRX CYCLES DETERMINED FOR THE UE FOR THE
MULTIPLE GROUPS OF CARRIERS

704. OBTAIN A FIRST DRX CYCLE FOR MCG
AND A SECOND DRX CYCLE FOR SCG

706. DETERMINE THE REFERENCE DRX
CYCLES FOR THE MULTIPLE GROUPS OF
CARRIERS BASED ON THE EXPLICIT
INDICATORS

708. PERFORM RADIO MEASUREMENT(S)
ON ONE OR MORE CELLS (INTER-RAT OR
INTER-FREQUENCY)

710. USE RADIO MEASUREMENT(S) FOR
ONE OR MORE PURPOSES

*FIG. 16*

DETERMINE AT LEAST ONE REFERENCE DRX CYCLE FOR A UE BASAED ON ONE OR MORE CRITERIA (e.g., MEASUREMENT TIME, UE BATTERY LIFE AND POWER CONSUMPTION, AND/OR BALANCING OF PERFORMANCE ACROSS MEASUREMENT OBJECTS)
800

CONFIGURE THE UE WITH AN INDICATOR RELATING TO THE AT LEAST ONE REFERENCE DRX CYCLE
802

*FIG. 17*

28

44

**BASEBAND UNIT**
**30**

| NETWORK INTERFACE **36** | PROCESSOR(S) **32** |

MEMORY **34**

**RADIO UNIT(S)**
**38**

TX(S) **40**

RX(S) **42**

44

*FIG. 18*

**NETWORK NODE**
**28**

REFERENCE DRX CYCLE DETERMINING MODULE
**46**

CONFIGURATION MODULE
**48**

*FIG. 19*

**FIG. 20**

**FIG. 21**